# EUROPEAN PATENT SPECIFICATION

(11) **EP 4 202 677 B1**
(45) Date of publication and mention of the grant of the patent: **25.11.2026**
(21) Application number: 22202213.9
(22) Date of filing: 18.10.2022
(51) Int. Cl.: G06F 9/50, G06F 8/60, G06F 9/455, H04L 9/40

(54) **OPTIMIZING DEPLOYMENT AND SECURITY OF MICROSERVICES**
OPTIMIERUNG DES EINSATZES UND DER SICHERHEIT VON MIKRODIENSTEN
OPTIMISATION DU DÉPLOIEMENT ET DE LA SÉCURITÉ DE MICROSERVICES

(30) Priority: 23.12.2021 US 202117561676
(43) Date of publication of application: 28.06.2023
(73) Proprietor: INTEL Corporation, Santa Clara, CA 95054 (US)
(72) Inventor: BOWMAN, Clair, Boise, 83709 (US); VIJ, Mona, Hillsboro, 97124-5961 (US); DOSHI, Kshitij Arun, Tempe, 85282 (US); SAXENA, Paritosh, Portland, 97229 (US); STEINER, Michael, Portland, 97201 (US); MORALES, Carlos, San Diego (US); MELARA, Marcela, Beaverton, 97007 (US); VAHLDIEK-OBERWAGNER, Anjo Lucas, Portland, 97229 (US)
(74) Representative: Viering, Jentschura & Partner mbB Patent- und Rechtsanwälte

(56) References cited:
- WO-A1-2016/075671
- US-A1- 2019 102 157
- US-A1- 2019 349 305
- US-A1- 2021 342 193
- JEFF NICKOLOFF: "Docker in action", INTERNET CITATION, 27 March 2016 (2016-03-27), pages 104 - 124, XP002791248, Retrieved from the Internet <URL:http://pepa.holla.cz/wp-content/uploads/2016/10/Docker-in-Action.pdf> [retrieved on 20180126]

## Description

### FIELD OF THE SPECIFICATION

This disclosure relates in general to the field of computing systems, and more particularly, though not exclusively, to optimizing the deployment of microservices/software applications in cloud environments.

### BACKGROUND

Web services today are typically deployed using Cloud Service Providers (CSPs) and are built using multiple microservices, or small software application instances.
Microservices communicate with each other to realize the desired business logic. To deploy, scale and provide fault tolerance, an orchestrator may be used to form a cluster of the selected infrastructure nodes for the web service.

US2019102157A1 relates to method of distributing microservice containers for a service across a plurality of computing environments may include receiving a service that is built from a plurality of containerized microservices to be deployed in a container platform. The container platform may include a plurality of computing environments. The method may also include receiving a deployment criteria for deploying the service in the container platform; accessing characteristics of the plurality of computing environments; and deploying the plurality of containerized micro services across the plurality of computing environments based on the deployment criteria and the characteristics of the plurality of computing environments.

### BRIEF DESCRIPTION OF THE DRAWINGS

The present disclosure is best understood from the following detailed description when read with the accompanying figures. It is emphasized that, in accordance with the standard practice in the industry, various features are not necessarily drawn to scale, and are used for illustration purposes only. Where a scale is shown, explicitly or implicitly, it provides only one illustrative example. In other embodiments, the dimensions of the various features may be arbitrarily increased or reduced for clarity of discussion.
**FIG. 1** illustrates an example system implementing a container orchestration framework in accordance with embodiments of the present disclosure.
**FIGS. 2A-2B** illustrate example container deployments on worker nodes in accordance with embodiments of the present disclosure.
**FIG. 3** illustrates an example system with collocated containers with shared memory in accordance with embodiments of the present disclosure.
**FIG. 4** illustrates a flowchart of an example process for deploying collocated microservices based on inter-microservice communication information in microservice metadata in accordance with embodiments of the present disclosure.
**FIG. 5** illustrates another example system with collocated containers with shared memory in accordance with embodiments of the present disclosure.
**FIG. 6** illustrates a chart of example resource saturation transfer functions for various resource saturation coefficients.
**FIG. 7** illustrates a flowchart of an example process for deploying collocated microservices based on resource saturation information in microservice metadata in accordance with embodiments of the present disclosure.
**FIG. 8** illustrates an example system with containers deployed in various security contexts in accordance with embodiments of the present disclosure.
**FIG. 9** illustrates a flowchart of an example process for deploying microservices based on security preference information in microservice metadata in accordance with embodiments of the present disclosure.
**FIGS. 10-11** illustrate deployment and orchestration for virtual edge configurations across an edge computing system operated among multiple edge nodes and multiple tenants.
**FIG. 12** illustrates various compute arrangements deploying containers in an edge computing system.
**FIG. 13** illustrates an example embodiment of a computing platform.

### EMBODIMENTS OF THE DISCLOSURE

When a particular feature, structure, or characteristic is described in connection with an embodiment, it is submitted that it is within the knowledge of one skilled in the art to effect such feature, structure, or characteristic in connection with other embodiments whether or not explicitly described. Additionally, it should be appreciated that items included in a list in the form of "at least one A, B, and C" can mean (A); (B); (C); (A and B); (A and C); (B and C); or (A, B, and C). Similarly, items listed in the form of "at least one of A, B, or C" can mean (A); (B); (C); (A and B); (A and C); (B and C); or (A, B, and C).

The disclosed embodiments may be implemented, in some cases, in hardware, firmware, software, or any combination thereof. The disclosed embodiments may also be implemented as instructions carried by or stored on a transitory or non-transitory machine-readable (e.g., computer-readable) storage medium, which may be read and executed by one or more processors. A machine-readable storage medium may be embodied as any storage device, mechanism, or other physical structure for storing or transmitting information in a form readable by a machine (e.g., a volatile or non-volatile memory, a media disc, or other media device).

In the drawings, some structural or method features may be shown in specific arrangements and/or orderings. However, it should be appreciated that such specific arrangements and/or orderings may not be required. Rather, in some embodiments, such features may be arranged in a different manner and/or order than shown in the illustrative figures. Additionally, the inclusion of a structural or method feature in a particular figure is not meant to imply that such feature is required in all embodiments and, in some embodiments, may not be included or may be combined with other features.

### Web Services / Containerization

Web services today are typically deployed using Cloud Service Providers (CSPs) and are built using multiple microservices, or small software application instances. Microservices communicate with each other to realize the desired business logic. To deploy, scale and provide fault tolerance, an orchestrator may be used to form a cluster of the selected infrastructure nodes for the web service. The microservices may be developed as part of a modular architecture and deployed as containers using an orchestration framework, e.g., Docker^{®} and/or Kubernetes^{®}. As used herein, "microservice" may refer to an application instance deployed on a node, e.g., inside a container of a node. In some instance, the node may implement a virtual machine inside which the microservice is deployed, e.g., within a container on the virtual machine. In some cases, a microservice may also be referred to as a workload.

Containers may run software applications, e.g., microservices, within isolated runtime environments while sharing the same OS kernel on a node. For example, each container on a node may be an isolated user-space instance that can be used to run one or more software applications (e.g., microservices), and multiple containers for different software applications can be instantiated on the same OS kernel. In this manner, software applications in different containers can share the same OS kernel while remaining isolated from each other. Moreover, each container is typically instantiated from a corresponding image that bundles a particular software application with all of its dependencies (e.g., application(s), tools, libraries, configuration files, and so forth), thus ensuring that the software application runs out-of-the-box on any machine running the appropriate operating system. In some instances, groups of one or more containers may be referred to as "pods" (e.g., in Kubernetes^{®}).

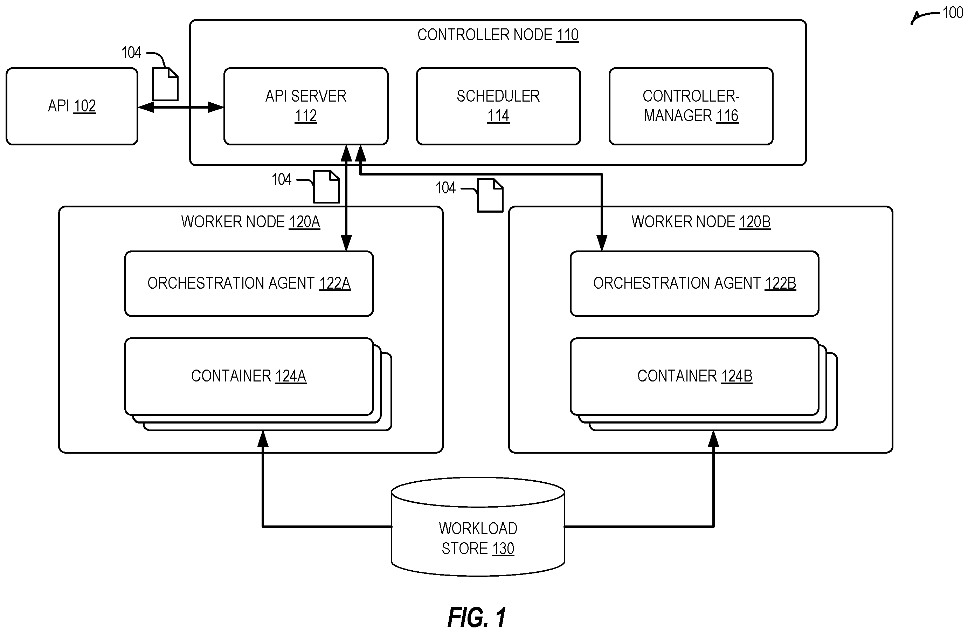

**FIG. 1** illustrates an example system 100 implementing a container orchestration framework in accordance with embodiments of the present disclosure. In some embodiments, the system 100 may be considered as a system that provides "cloud services". The system 100 includes a controller node 110 and multiple worker nodes 120. The controller node 110 is responsible for orchestration and deployment decisions for the worker nodes 120 and is the interface to a developer deploying workloads via an application programming interface (API) 102 (e.g., using kubectl in Kubernetes^{®}). Workloads are executed via containers 124 on the worker nodes 120. The worker nodes 120 each run an orchestration agent 122 (e.g., a kubelet in Kubernetes^{®}) that provides general access to common infrastructure of the worker node 120 or the cloud service provider, such as remote workload stores (e.g., workload store 130) or storage. The orchestration agent 122 may deploy the containers 124 based on container images stored in the workload store 130 and/or metadata 104 provided either via the API 102 or the controller node 110 (e.g., as described further below). In some instances, the orchestration agent 122 may run one or more containers 124 in a group sometimes referred to as a "pod". The orchestration agent 122 may also provide information to the controller node 110 about the execution of the containers 124 on the worker node 120, e.g., telemetry or other data.

The controller node 110 includes an API server 112 that receives API commands from and otherwise interfaces with developers deploying workloads in the system 100. For instance, the API server 112 may expose an API for the orchestration framework (e.g., Kubernetes^{®}), which may be the front end for the control plane of the orchestration framework. The controller node 110 also includes a scheduler 114 that selects a worker node 120 on which to deploy a container 124. The scheduler may take into account one or more of the aspects described further below (e.g., collocation, microservice quality of service (QoS), security needs, etc.) in addition to other factors when making a deployment decision for a container 124. The controller node 110 also includes a controller-manager 116 that runs controller processes, such as node controllers or job/service controllers, and/or provides cloud-specific controls to developers.

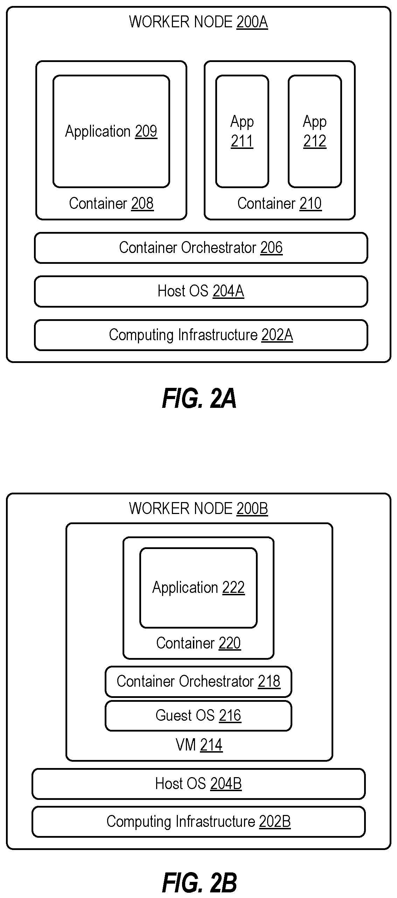

**FIGS. 2A-2B** illustrate example container deployments on worker nodes 200 in accordance with embodiments of the present disclosure. In particular, FIG. 2A illustrates a container-only deployment on the worker node 200A, while FIG. 2B illustrates a container deployment within a virtual machine executing on the worker node 200B. In each example, the worker node 120 includes a computing infrastructure 202 and a host operating system (OS) 204 executing on the infrastructure 202. The computing infrastructure 202 can include the processing, memory, storage, and other computational resources of the worker node 200, and the host operating system (OS) 204 can include any suitable operating system (e.g., Linux) running on the computing infrastructure 202.

Each example also includes a container orchestrator (e.g., 206, 218) and containers (e.g., 208, 210, 220). The container orchestrator is responsible for creating and orchestrating the containers across the underlying computing infrastructure, which may include actual underlying computing infrastructure 202 (e.g., in FIG. 2A) or a virtualized/abstracted version of the underlying computing infrastructure 202 (e.g., as in FIG. 2B). In some embodiments, for example, the container orchestrator may be implemented using Docker Swarm, Kubernetes, HashiCorp Nomad, and/or any other suitable container orchestration service. In the example shown in FIG. 2A, the container orchestrator 206 is running two containers 208 and 210. Container 208 is running an application 209 on the host OS 204A, while container 210 is running two applications 211, 212 on the host OS 204A. In the example shown in FIG. 2B, the container orchestrator 218 is running a container 220 on a guest OS 216 running on a virtual machine 214, which is running on the host OS 204B.

While current orchestration environments take into account a number of variables when deploying containers within the orchestration framework, the environments do not take into account a number of important aspects. For example, orchestrators today do not comprehend communication relationships between microservices as part of the deployment decision process. This includes which microservice communicates with other microservices and the nature of communication like typical frequency and payload size. Due to lack of this intelligence by the orchestrator, microservices may be placed arbitrarily on the cluster of worker nodes, leading to network overhead associated with microservice communications affecting overall web service performance.

In addition, service quality objectives (SQOs) or service level agreements (SLAs) that an application must meet are generally baked into application logic. Such application logic absorbs the responsibility to provision the necessary resources, shard the data, schedule computations, and achieve scaling. In the cloud, the same responsibilities need to be met in a services-oriented architecture in a manner that does not negate the independent scaling, deployment, testability, maintainability and development velocity benefits of service decomposition. However, current orchestrators do not factor in such information when deploying containers onto nodes.

These problems may also compound with autoscaling. When autoscaling creates new instances of a service, it may, in general locate those instances according to utilization balancing as a primary concern. Similarly, when existing instances are reduced or suspended during de-scaling, a general optimization concern is to target nodes with high utilizations first (fairness), or to target nodes with very low utilization (consolidation). Similarly, when existing instances are reduced or suspended during de-scaling, a general optimization concern is to target nodes with high utilizations first (fairness), or to target nodes with very low utilization (consolidation). All this adds to unknown impacts on SLA/SQO management at the higher levels of the comprising web applications (services).

Furthermore, orchestrators may not fully take into account security needs of workloads/microservices when making deployment decisions. For instance, existing solutions target a single form of security guarantee and do not allow tenants to choose the level at runtime. As a result, a tenant must decide the level of security before the setup of the microservice. This can result in inefficient orchestration decisions and higher overhead due to deploying with the strongest security level. It also hobbles the ability of tenant software developers to achieve high velocity in their solution development and testing and integration iterations, and adds to their plate the burden of compensating for performance losses from having to adjust on top of different one-size-fits-all security/safety measures baked into different CSP's practices and environments.

Accordingly, aspects of the present disclosure may account for these types of information when making container deployment decisions in an orchestration framework. For example, some embodiments may extend metadata associated with microservices deployed in the orchestrator with additional information about the communication relationships between the microservices. As another example, some embodiments may extend the deployment metadata with additional information about microservice node resource needs in addition to the communication relationships between the microservices. In some embodiments, the metadata may also incorporate SQO/SLA impacts on a microservice due to temporal dependencies on other microservices and dependencies on local node level resources. As yet another example, the metadata may be extended with additional information about the security requirements of a new microservice or security preferences of the microservices.

Using the extended metadata, the orchestration framework can decide the specific node(s) to target for the microservices, specific actions to be taken on the node(s) like creating shared memories for collocated microservices and allocating node level resources like memory bandwidth, cache, network bandwidth etc., installing specific updates/patches etc., or reconfiguration and recompiling, and/or in some cases, layering in sandboxing proxies. The shared memory created may be used to communicate between the microservices instead of network, allowing for faster communication between collocated microservices. In addition, node level resources can ensure optimal execution of microservices on the node, and ensure that the microservices provide the required SQO/SLA and/or security required by the microservices.

One advantage of the embodiments disclosed herein is that the underlying microservice code is not expected/needed to change; rather, adaptation to the extended metadata/deployment decision making may be performed by a communication layer in the orchestration framework based on the extended metadata provided to the communication layer by an orchestration agent or by optimized allocation of node level resources by a node agent.

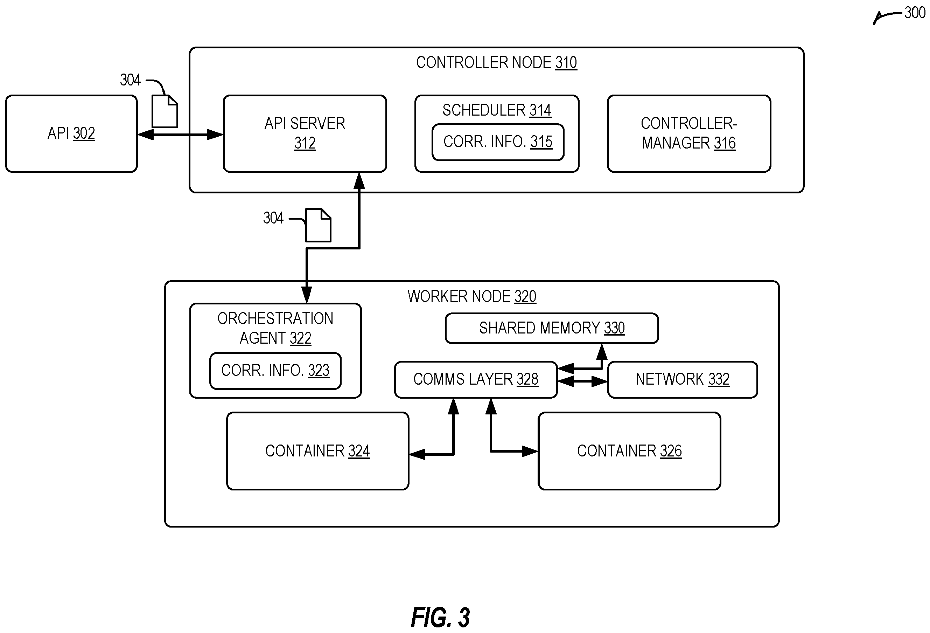

**FIG.** 3 illustrates an example system 300 with collocated containers and shared memory in accordance with embodiments of the present disclosure. Aspects of the example system 300 may be implemented in a similar manner as the corresponding aspects as described above with respect to FIG. 1. For example, components of the controller node 310 (including the API server 312, scheduler 314, and controller-manager 316) may be implemented similar to the controller node 110 of FIG. 1, and components of the worker node 320 (e.g., orchestration agent 322) may be implemented similar to the worker node 120 of FIG. 1.

In the example shown, the metadata 304 may include additional data that captures communication relationships between various microservices to be deployed as containers (e.g., 324, 326) in the system 300. The metadata may include, for example, information indicating how often a microservice communicates with another microservices, a typical size of payload in such communications, etc. In some embodiments, the metadata 304 may be sent via kubectl commands in a Kubernetes^{®} implementation of the system 300.

The scheduler 314 may then use the metadata including the inter-microservice communication information to perform a rank analysis and develop correlations between various microservices to be deployed (or those already deployed). The correlations can be stored as correlation information 315 (and/or 323) and can include, for example, for each target microservice to be deployed, a ranking of which other microservices are to be collocated with the target microservice. The correlation information is used to make collocation decisions for the microservices (e.g., determine how many/which microservices should be collocated on the same node, e.g., 320). For instance, the scheduler 314 uses the rank relationship(s) to select the microservices which would benefit from being collocated on the same node (and communicate over a shared memory on the node instead of a network/virtual network connection). In some embodiments, the orchestration agent 322 and/or the scheduler 314 may modify metadata 304 associated with one or more microservices based on the determined and updated correlation information.

Decisions may be taken by the scheduler 314 to select a new node into a cluster to meet the requirements or decision to collocate selected microservices. The new node may be selected to meet the desired compute, memory, and storage needs of the target microservices that are to be deployed. In some embodiments, the scheduler 314 can additionally select nodes that are logically near each other (i.e., have minimal network overhead, e.g., are in the same datacenter) when the target microservices cannot be placed on the same node.

In some cases, the actual implementation of various microservices may vary from an intended or anticipated usage, and thus, in some embodiments, the correlation information may be determined in the background during execution of the microservices and existing correlation information may be updated periodically in the background as well. For example, the orchestration agent 322 can (e.g., periodically) send usage information (e.g., telemetry) about the containers (e.g., 324, 326) executing the microservices and the correlation information may be updated on the controller node 310 and/or the worker node 320 dynamically based on the usage information. Each worker node and/or the controller node may maintain the correlation information in a lookup-friendly data structure in memory, so that scheduling decisions can be kept simple and efficient. In some embodiments, the scheduler 314 and orchestration agent 322 can simply map the data-structure into their address space and use it as read-only data for their decisions. The correlation information may be updated in a shadow structure in some embodiments (vs. an in-use structure), and the shadow structure and the in-use structure may periodically swap roles without requiring the scheduler 314 to be interrupted or disrupted.

In some embodiments, to support communications between microservices/containers (e.g., 324, 326) that are collocated on a worker node (e.g., 320), a shared memory (e.g., 330) may be implemented on the worker node. The shared memory can be used for communication between the microservices instead of a network/virtual network connection. To implement the shared memory 330, a communication layer 328 on the node 320 may be modified so that it can target the shared memory 330 for communications between the particular microservices/containers 324, 326 instead of using the (virtual) network connection 332. Such a change may be transparent to the workload implemented by the containers 324, 326 and thus, no change may be required to the underlying microservice code. The shared memory 330may include a range of memory of the worker node 320 to be used for input and output. In some embodiments, the shared memory 330 may be implemented by the orchestration agent 322. Microservice and/or buffer information may be captured in the metadata 304 for the communication layer 328 to consume. For instance, the metadata 304 may be provided to the communication layer 328 by the orchestration agent 322, which in turn may obtain the metadata 304 from the scheduler 314 as shown. In some embodiments, elements of the metadata 304 may be provided by the scheduler 314 while other elements (e.g., those related to the shared memory ranges) may be added or otherwise provided by the orchestration agent 322.

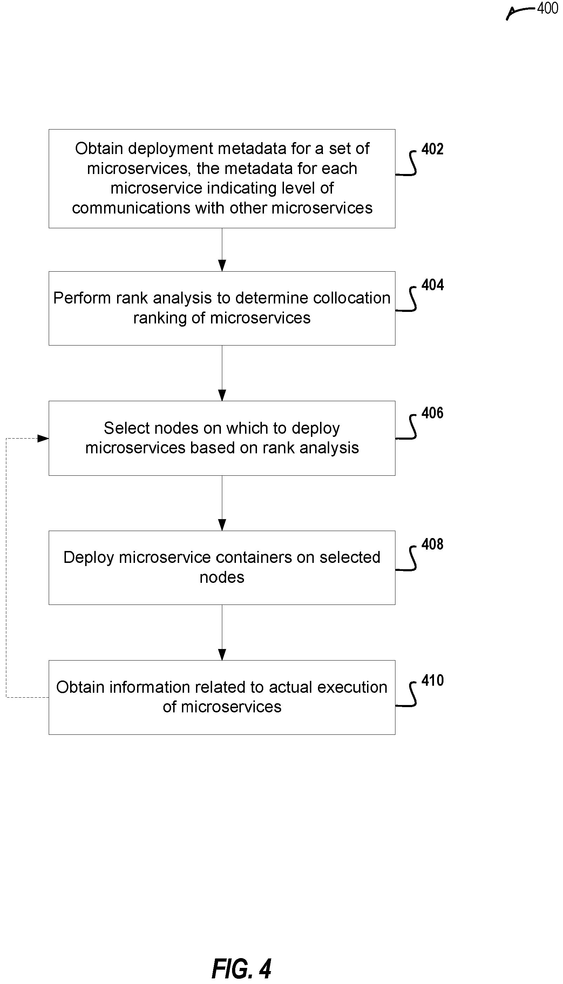

**FIG. 4** illustrates a flowchart of an example process 400 for deploying collocated microservices based on inter-microservice communication information in microservice metadata in accordance with embodiments of the present disclosure. Aspects of the example process 400 may be performed by components of a node in an orchestration environment (e.g., one or both of the controller node 110 and worker node 120 of FIG. 1). In some embodiments, operations of the example process 400 may be encoded as instructions in a machine-readable storage medium, such that execution of the instructions may implement the operations shown in FIG. 4 and described below.

At 402, deployment metadata for a set of microservices is obtained. The metadata for each microservice deployment may indicate a number of different things related to the deployment of the microservice as a container within an orchestration environment (e.g., labels to identify a microservice container and/or annotations of fields managed by a configuration layer of the orchestration environment, build, release, and/or image information, pointers to other services, etc.). The metadata further includes information about a level of communication the microservice may have with one or more other microservices within the environment as described above.

At 404, a rank analysis is performed to determine a collocation ranking for the set of microservices. For example, the rank analysis includes determining communication correlations between the microservices of the set of microservices. For instance, a first communication correlation may represent a correlation between a first and second microservice and a second communication correlation may represent a correlation between the first and a third microservice, and a third communication correlation may represent a correlation between the second and third microservices. In some embodiments, the correlations may be represented by numerical values that are ranked in the rank analysis.

At 406, nodes on which to deploy the set of microservice are selected based on the rank analysis performed at 404. In some embodiments, all or some of the microservices may be selected to be collocated on the same node within the environment. For instance, the correlation values may be used to determine which, if any, microservices should be collocated on the same node. In some cases, collocation may be determined for particular microservices where their correlation value is above a certain threshold. In some cases, collocation may be desired for multiple nodes, but only certain microservices may be actually collocated (e.g., due to node restrictions, availability, etc.). As an example, where three microservices are to be collocated based on the rank analysis, but only two may be in fact collocated, the two selected to be collocated may be determined based on which set has the higher correlation value determined at 404. The third microservice may be selected to be deployed on a node that is "nearby" the node on which the other two microservices are deployed, i.e., on a node that is determined to have the least amount of network overhead with respect to the node on which the other microservices are deployed.

At 408, the microservices are deployed according to the selection made at 406. This may include collocation of microservices as described, which may involve the implementation of a shared memory between collocated microservices on the same node as described above.

At 410, information related to the actual execution of the microservices within the environment (e.g., the actual communication patterns between microservice containers) is collected, which may be used to determine whether relocation is optimal (e.g., as shown by the dotted arrow line in FIG. 4).

The example process 400 may include additional or different operations, and the operations may be performed in the order shown or in another order. In some cases, one or more of the operations shown in FIG. 4 are implemented as processes that include multiple operations, sub-processes, or other types of routines. In some cases, operations can be combined, performed in another order, performed in parallel, iterated, or otherwise repeated or performed another manner.

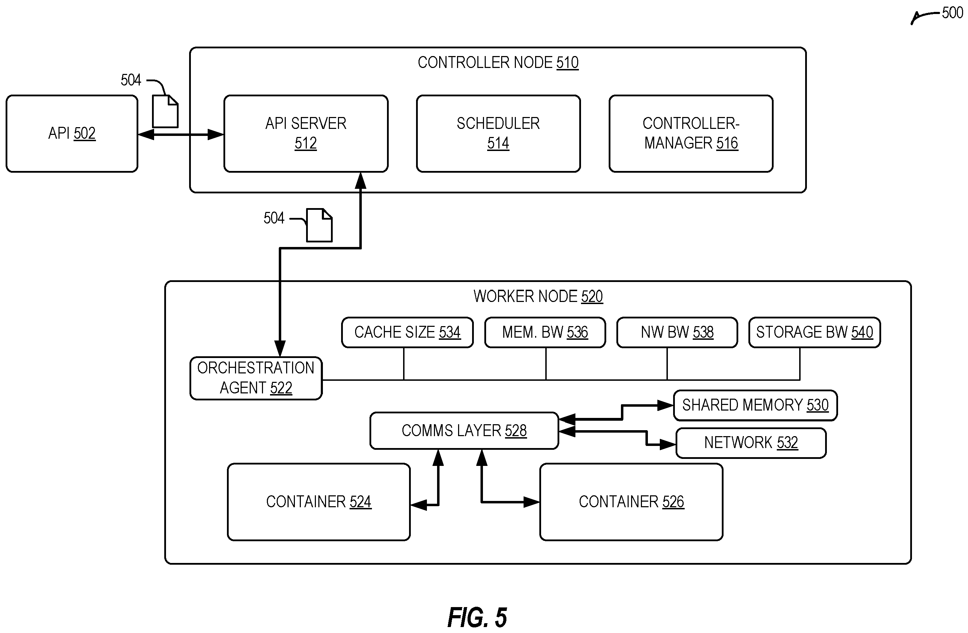

**FIG.** 5 illustrates another example system 500 with collocated containers with shared memory in accordance with embodiments of the present disclosure. Aspects of the example system 500 may be implemented in a similar manner as the corresponding aspects as described above with respect to FIG. 1 and FIG. 3. For example, components of the controller node 510 (including the API server 512, scheduler 514, and controller-manager 516) may be implemented similar to the controller node 110 of FIG. 1 and/or the controller node 310 of FIG. 3, and components of the worker node 520 (e.g., orchestration agent 522) may be implemented similar to the worker node 120 of FIG. 1 and/or the worker node 320 of FIG. 3.

In particular, the system 500 is implemented similar to the system 300 of FIG. 3, but with additional extensions (e.g., to the metadata 504) to provide optimized deployment and management of microservice or container service quality objectives (SQOs) and/or service level agreements (SLAs) in the system 500. Some embodiments, for instance, may further extend the metadata (e.g., 504) to include information about how microservices/containers may interact with one another on a worker node (e.g., 520). As an example, the metadata may include one or more of latency transfer coefficients (LTCs) or resource saturation coefficients (RSCs). The LTCs may reflect, for each pair of communicating microservices, a composite measure of the degree to which a response latency of one microservice affects the response latency of the other microservice. The LTCs may be obtained through online or offline measurements under controlled situations by sweeping over a number of artificially introduced delay parameters in their request/response interactions. The RSCs may reflect a measure of the degree to which compute resources needed or used by one microservice affects the compute resources needed or used by another microservice. In some embodiments, the RSCs may be implemented as vectors of positive values between 0.0-1.0. Each microservice may have a corresponding RSC vector of size K, where K is the number of resource types (e.g., CPU cycles, cache capacity, memory bandwidth in tier 1, memory bandwidth in tier 2, etc.).

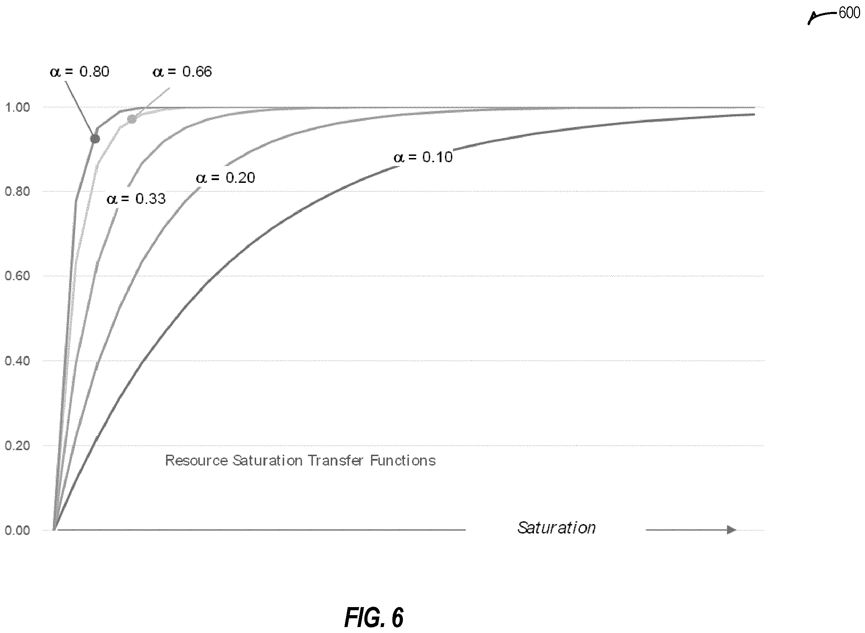

**FIG.** 6 illustrates a chart 600 of example resource saturation transfer functions for various resource saturation coefficients (e.g., the LTCs or RSCs described above). In particular, the chart 600 illustrates a summary measure of the sensitivity of a microservice's SLA on the vertical axis to the saturated usage on the horizontal axis the microservice can obtain for itself, for a particular resource type (e.g., processor, memory, or I/O bandwidth). If, for example, a microservice M is lightly sensitive to a memory bandwidth but is moderately to highly sensitive to the fraction of its peak CPU reservation that is available for it to saturate, then its memory bandwidth saturation coefficient may be relatively high (e.g., α_{MEMBW} = 0.80) but its processor saturation coefficient may be relatively low (e.g., α_{CPU} = 0.20). Thus, the resource saturation coefficients may reflect how much latitude one may have for reducing a microservice's consumption of a given resource type before the microservice exhibits a linear or faster-than-linear drop in its ability to meet an SLA metric.

Referring back to the system 500 of FIG. 5, the scheduler 514 can use the metadata 504 (that includes resource saturation information as described above) to develop correlations between: (1) microservices and nodes based on available node resources, and (2) between the microservices. The scheduler 514 can use the node correlation information to select a particular worker node (e.g., 520) with an appropriate allocation of resources for the microservice. The scheduler 514 may use the correlation information between the microservices to identify which microservices might benefit from being collocated on the same node. For example, as part of a collocation decision, the scheduler 514 may evaluate one or more of the following: being able to communicate over a shared memory instead of network (e.g., as described above), the degree to which it can trade off sharing resources for a corresponding gain in communication efficiency (e.g., as reflected in the LTCs) versus a corresponding marginal loss in its SLA compliance (e.g., as reflected in the RSCs.). In some embodiments, the orchestration agent 522 and/or the scheduler 514 may modify metadata 504 associated with one or more microservices based on the determined and updated correlation information

Decisions may be made by the scheduler 514 to select a new worker node to meet the requirements to collocate the selected containers (e.g., 524, 526) running the microservices. The new node may be selected to meet the desired compute, memory, and storage needs of the target microservices. As with the example in FIG. 3, the scheduler 514 can select worker nodes that are logically near one another (i.e., have minimal network overhead between them) when microservices cannot be placed on the same worker node. Additionally, as described above, the correlation information may be determined in the background and existing correlation information may be updated periodically in the background as well. Each worker node that hosts collocated containers (e.g., worker node 520 with containers 524, 526) may implement a shared memory as described above.

In some embodiments, the orchestration agent 522 on each worker node 520 may interact with applications or other logic on the worker node 520 (e.g., Intel RDT (Resource Director Technology)) to ensure each container is allocated its desired or needed resources. For example, the orchestration agent 522 may obtain information from the worker node 520 related to its cache size 534, memory bandwidth 536, network bandwidth 538, storage bandwidth 540, or information about the same metrics with respect to the execution of each container 525, 526 (e.g., each container's respective usage of such resource metrics). Other node resource metrics may be collected and/or analyzed by the orchestration agent 522. The orchestration agent 522 may provide the resource metrics to the controller node 510 (e.g., to the scheduler 514) as well in certain embodiments.

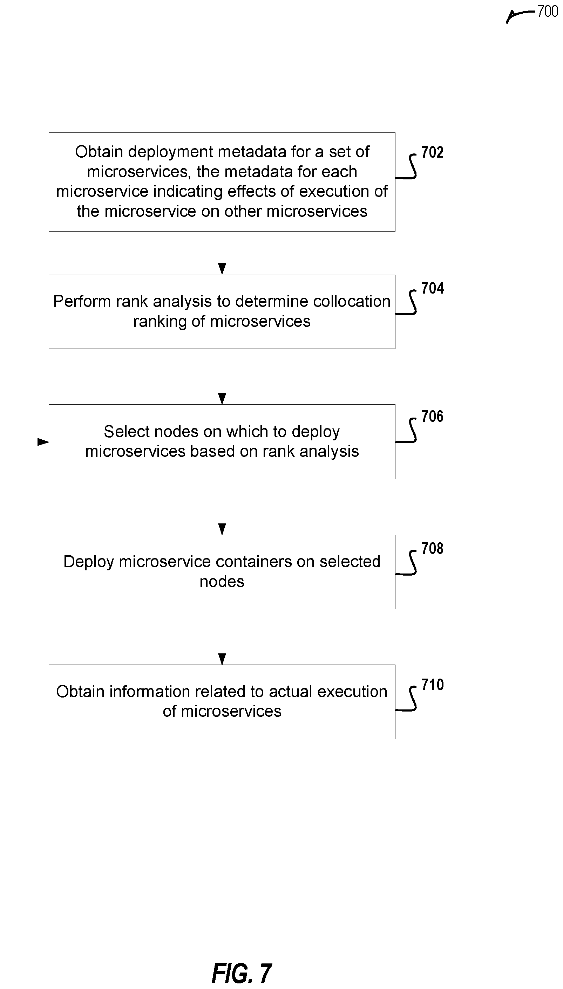

**FIG. 7** illustrates a flowchart of an example process 700 for deploying collocated microservices based on resource saturation information in microservice metadata in accordance with embodiments of the present disclosure. Aspects of the example process 700 may be performed by components of a node in an orchestration environment (e.g., one or both of the controller node 110 and worker node 120 of FIG. 1). In some embodiments, operations of the example process 400 may be encoded as instructions in a machine-readable storage medium, such that execution of the instructions may implement the operations shown in FIG. 7 and described below.

At 702, deployment metadata for a set of microservices is obtained. The metadata for each microservice deployment may indicate a number of different things related to the deployment of the microservice as a container within an orchestration environment (e.g., labels to identify a microservice container and/or annotations of fields managed by a configuration layer of the orchestration environment, build, release, and/or image information, pointers to other services, etc.). The metadata further includes information about how execution of the microservice affects execution of other microservices within the environment. For example, in some embodiments, the metadata for each microservice may include the LTCs and/or the RSCs as described above.

At 704, a rank analysis is performed to determine a collocation ranking for the set of microservices. For example, the rank analysis includes determining correlations between each of the microservices of the set of microservices using the LTCs and/or RSCs of the metadata. The correlations may be represented by numerical values that are ranked in the rank analysis.

At 706, nodes on which to deploy the set of microservice are selected based on the rank analysis performed at 704. In some embodiments, all or some of the microservices may be selected to be collocated on the same node within the environment. For instance, the correlation values may be used to determine which, if any, microservices should be collocated on the same node. In some cases, collocation may be determined for particular microservices where their correlation value is above a certain threshold. In some cases, collocation may be desired for multiple nodes, but only certain microservices may be actually collocated (e.g., due to node restrictions, availability, etc.).

At 708, the microservices are deployed according to the selection made at 706. This may include collocation of microservices as described, which may involve the implementation of a shared memory between collocated microservices on the same node as described above.

At 710, information related to the actual execution of the microservices within the environment (e.g., the compute resource usage patterns between microservice containers) is collected, which is used to determine whether relocation is optimal (e.g., as shown by the dotted arrow line in FIG. 7).

The example process 700 may include additional or different operations, and the operations may be performed in the order shown or in another order. In some cases, one or more of the operations shown in FIG. 7 are implemented as processes that include multiple operations, sub-processes, or other types of routines. In some cases, operations can be combined, performed in another order, performed in parallel, iterated, or otherwise repeated or performed another manner.

By intelligently collocating microservices (e.g., in the same Kubernetes cluster^{®}) using the techniques described above, network overhead can be avoided or minimized. Further, new technologies like Webassembly (WASM) can enable packaging multiple microservices in one WASM container to reduce the footprint without compromising on security. The of shared memory with WASM deployment can provide additional network optimizations benefits.

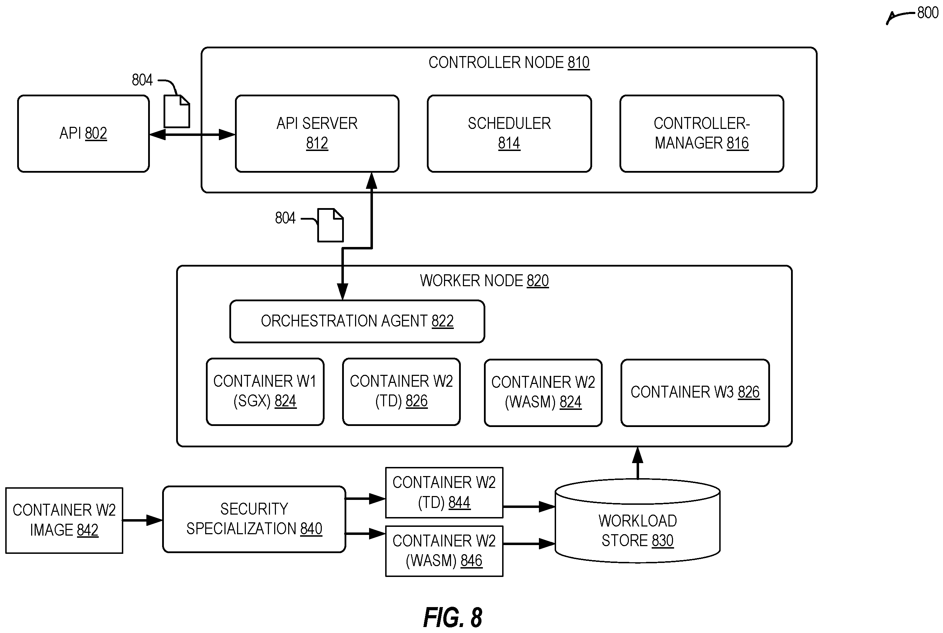

**FIG. 8** illustrates an example system 800 with containers deployed in various security contexts in accordance with embodiments of the present disclosure. Aspects of the example system 800 may be implemented in a similar manner as the corresponding aspects as described above with respect to FIG. 1. For example, components of the controller node 810 (including the API server 812, scheduler 814, and controller-manager 816) may be implemented similar to the controller node 110 of FIG. 1, and components of the worker node 820 (e.g., orchestration agent 822) may be implemented similar to the worker node 120 of FIG. 1.

Current orchestration systems do not currently take into account security requirements or preferences of microservices when making deployment decisions. This contrasts with recent advances in security mechanisms for applications, e.g., hardware-provided confidentiality and/or integrity isolation techniques, e.g., encrypted VM or application isolations such as Intel's SGX^{™} and TDX^{™}. Such techniques can provide protections against advanced adversaries who attack the operating system and/or hypervisor of a node, or even provide protections against physical attacks in some cases. In addition, software-based isolation techniques like WASM can improve the overall performance and elasticity of applications while reducing the required memory footprint compared to existing container or VM-based techniques. Efficient coarse-grained memory protection is also possible within a shared address space with differential attributes layered atop page table protections, using PKEYs.

Accordingly, embodiments herein take into account security preferences and/or requirements of microservices to take advantage of these new security advances. For instance, certain embodiments may extend the metadata of microservices (e.g., metadata 804) to provide differentiated security for different workloads in the cloud. The metadata 804 include some indication of security intentions, preferences, or requirements of a microservice, and the scheduler 814 uses the additional security preference information in the metadata to make deployment decisions. For example, a deployment decision may be influenced by which environments currently exist on a node (e.g., whether the node supports Intel SGX/TDX and/or WASM) or which environments could be reused for a new microservice. The scheduler 814 may determine an optimal amount of security for the microservice deployment that satisfies certain performance guarantees or requirements (e.g., in SLAs). In embodiments implemented virtual machines, thread scheduling can be used to achieve side-channel free caching by assigning pods or containers for each workload so that processor cores are not shared between microservices. New scheduling classes can provide for application-controlled, non-preemptive scheduling so that security-sensitive actions can be performed uninterrupted and sensitive ephemeral states can be wiped clean within fractions of microseconds.

For example, it may be the case that metadata for a microservice indicates a security preference for a TD or SGX environment; however, the metadata may also indicate a particular compute resource requirement at the same time. The scheduler 814 may determine that a particular worker node can provide the required compute resources but can only provide a WASM environment for the microservice, while another node can provide a TD/SGX environment but cannot also provide the required compute resources for the microservice. Thus, the scheduler 814 may decide to deploy the microservice on the former node rather than the latter. Where the scheduler 814 determines a node is capable of providing both the required compute resources and a TD/SGX environment, it may deploy the microservice on that node.

As another example, metadata for a microservice may indicate certain inter-microservice communication information as described above, and may be capable of being deployed in a number of different security environments. If the scheduler 814 determines that a particular node is best the microservice (e.g., collocating the microservice with another as described above), the scheduler 814 may determine the best security environment that the node can provide (e.g., a WASM deployment instead of a common deployment without any additional security context) and select such a deployment for the microservice.

To be able to select between different security techniques for deployment, each workload may be prepared for each type of technique. However, due to their different deployment and compile time and runtime capabilities, an original workload container may need to be adapted or, in some cases, even recompiled. Thus, in some embodiments, a security specialization engine (e.g., 840) can be used (offline or online) to create or compile different security versions (e.g., 844, 846) of a microservice container image (e.g., 842) before the microservice container image is placed into the workload store 830. The original microservice container image 842 may be compiled at various levels prior to being input to the security specialization engine. For example, in some embodiments, the container image 842 may be in a source code format that can be compiled down to object code or machine code instances. In other embodiments, the container image 842 may be in an object code format that can be compiled down to machine code instances. In yet other embodiments, the container image 842 may be in a machine code format that must be re-compiled prior to deployment as another type of security instance. At deployment time, the scheduler 814 can select a particular version of the microservice container from the workload store 830 to deploy based on the scheduler's security decision and deploy the selected instance in the selected security isolation technique.

One potential advantage of differentiating container deployment by security technique is that each security technique has its own security and performance strengths and tradeoffs, and therefore, container deployment can be optimized for different security preferences/requirements. For example, Intel SGX and TDX environments can provide strong confidentiality protections even against the administrators in the cloud provider's organizations, providing a zero-trust environment. This stronger security solution can come at the cost of performance in some instances, however. On the other hand, WASM-based isolation techniques might not provide as strong isolation as the SGX/TDX environments, but can enable workloads to more efficiently communicate due to its nature of running all workloads in the same applications. These tradeoffs can be considered by the scheduler 814 when deploying a microservice into the environment. Enabling different isolation techniques for each microservice (e.g., as different container versions through the security specialization engine 840 as described above) can result in more secure and higher performance deployments of the microservices.

In some embodiments, "sidecars" can be used to aid in the re-deployment of containers within the environment. A "sidecar" may refer to separate code or a separate application that is deployed alongside a core application that contains the core functionality of a service, i.e., generic application functionalities that are platform agnostic, where the sidecar implements certain functionalities that are more platform specific, e.g., communication and/or resource functionalities. In some instances, a microservice may be deployed as two containers: one containing the core microservice code/functionalities and another containing the sidecar functionalities. It is somewhat common to employ sidecars in cloud environments to factor out application-intrinsic concerns from those of the platform and environment within which an application runs.

Sidecars may provide a powerful means of layering in additional security policy customization on a dynamic basis. For example, if a container migrates from one node or host environment to another, a parameterized policy in the sidecar can activate recompiling, relinking, wiping of sensitive state, and other privacy, confidentiality, or audit trail generation steps. Further, such steps can be themselves modular so that only the steps needed to account of differences between privacy guarantees are taken. For example, if a container migrates from a host in a machine M1 that has an advanced version of Intel^{®} QuickAssist Technology (QAT) (QAT1) providing a hardware-accelerated post-quantum crypto encryption to another machine M2 that may be has an older version of QAT (QAT2). In this case, a deployment policy may steer the sidecar onto M2 so that the sidecar either supplies a software version of the operation performed by QAT1, or selects a combination of software and hardware method to encrypt its file, network, or memory data.

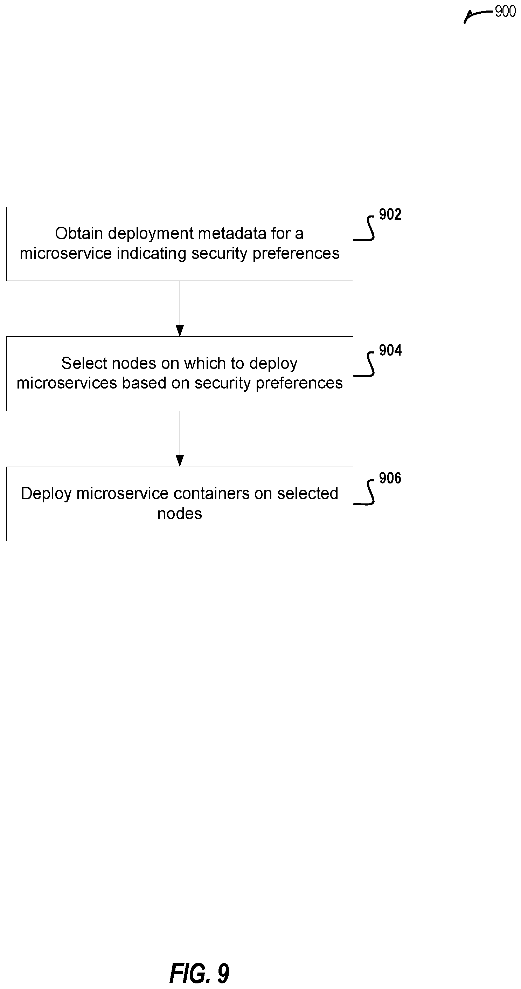

**FIG. 9** illustrates a flowchart of an example process 900 for deploying microservices based on security preference information in microservice metadata in accordance with embodiments of the present disclosure. Aspects of the example process 900 may be performed by components of a node in an orchestration environment (e.g., one or both of the controller node 110 and worker node 120 of FIG. 1). In some embodiments, operations of the example process 900 may be encoded as instructions in a machine-readable storage medium, such that execution of the instructions may implement the operations shown in FIG. 4 and described below.

At 902, deployment metadata for a set of microservices is obtained. The metadata for each microservice deployment may indicate a number of different things related to the deployment of the microservice as a container within an orchestration environment (e.g., labels to identify a microservice container and/or annotations of fields managed by a configuration layer of the orchestration environment, build, release, and/or image information, pointers to other services, etc.). The metadata further includes security preference information indicating one or more preferred execution environments for the microservice. For example, the security preference information may include an ordered set of preferred execution environments for the microservice, e.g., an encrypted, isolated environment (e.g., TDX or SGX) as a first priority, an unencrypted, isolated environment (e.g., WASM) as a second priority, etc. The security preferences may include one or more security requirements, e.g., where an encrypted execution environment is required for the microservice. Further, the security preferences may include certain security restrictions or minimums, e.g., a minimum security level for execution of the microservice (e.g., WASM or above).

At 904, a node of a plurality of nodes is selected for deployment of the microservice. The node may be selected based on its security abilities, e.g., what environments is may provide for the microservice. This may be based on what environments are currently available to the node or are expected to be available shortly. For instance, a node may be able to execute TDX environments, but the node may be currently utilizing all of its TDX instances and thus cannot implement a new application in the TDX environment. In some embodiments, the selection of the node may be based on other metadata or factors as well. For instance, in some embodiments, the metadata may indicate one or more of inter-microservice communication information, LTCs, and/or RSCs as described above, and the deployment node selection may be based on both the security preferences and e.g., whether the microservice should be collocated with another node as described above.

In some embodiments, a selection of an execution environment may occur along with the node selection at 904. For instance, a node may be selected based on its ability to provide two or more of the preferred execution environments of a microservice (e.g., both WASM and TDX), and one of the available execution environments may be selected. For instance, where a microservice indicates a preference for TDX over WASM and the selected node can provide both environments, the TDX environment may be chosen at the same time.

At 906, the microservice is deployed on the selected node. In some instances, deployment of the microservice may include instantiation of a new container image based on an existing container image. For example, deployment may include the creation of a selected execution environment version of a container for the microservice, e.g., as described above with respect to the security specialization engine 840 creating different security versions 844, 846 of a microservice container.

The example process 900 may include additional or different operations, and the operations may be performed in the order shown or in another order. In some cases, one or more of the operations shown in FIG. 9 are implemented as processes that include multiple operations, sub-processes, or other types of routines. In some cases, operations can be combined, performed in another order, performed in parallel, iterated, or otherwise repeated or performed another manner.

### Example Computing Environments

The following sections present various examples of computing devices, systems, architectures, and environments that may be used to implement the container-first architecture described throughout this disclosure.

### Edge Orchestration/Virtualization

The deployment of a multi-stakeholder edge computing system may be arranged and orchestrated to enable the deployment of multiple services and virtual edge instances, among multiple edge nodes and subsystems, for use by multiple tenants and service providers. In a system example applicable to a cloud service provider (CSP), the deployment of an edge computing system may be provided via an "over-the-top" approach, to introduce edge computing nodes as a supplemental tool to cloud computing. In a contrasting system example applicable to a telecommunications service provider (TSP), the deployment of an edge computing system may be provided via a "network-aggregation" approach, to introduce edge computing nodes at locations in which network accesses (from different types of data access networks) are aggregated. Moreover, these over-the-top and network aggregation approaches can also be implemented together in a hybrid or merged approach or configuration.

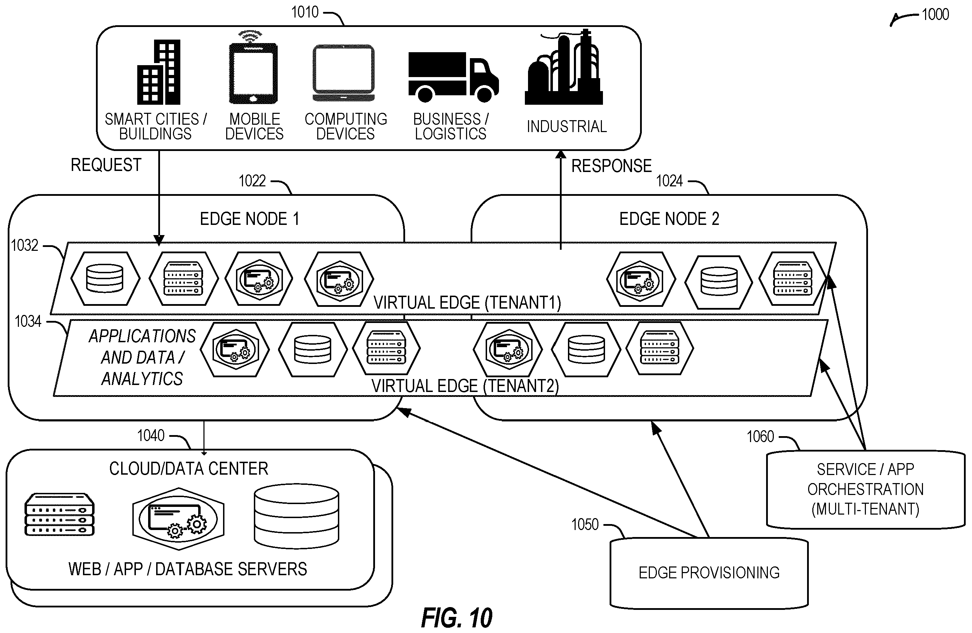

As an extension of either CSP or TSP configurations, **FIGS. 10-11** illustrate deployment and orchestration for virtual edge configurations across an edge computing system operated among multiple edge nodes and multiple tenants. Specifically, **FIG. 10** depicts coordination of a first edge node 1022 and a second edge node 1024 in an edge computing system 1000, to fulfill requests and responses for various client endpoints 1010 (e.g., smart cities / building systems, mobile devices, computing devices, business/logistics systems, industrial systems, etc.) which access various virtual edge instances. The virtual edge instances provide edge compute capabilities and processing in an edge cloud, with access to a cloud/data center 1040 for higher-latency requests for websites, applications, database servers, etc. However, the edge cloud enables coordination of processing among multiple edge nodes for multiple tenants or entities.

In the example of **FIG.** 10, these virtual edge instances include: a first virtual edge 1032, offered to a first tenant (Tenant 1), which offers a first combination of edge storage, computing, and services; and a second virtual edge 1034, offering a second combination of edge storage, computing, and services. The virtual edge instances 1032, 1034 are distributed among the edge nodes 1022, 1024, and may include scenarios in which a request and response are fulfilled from the same or different edge nodes. The configuration of the edge nodes 1022, 1024 to operate in a distributed yet coordinated fashion occurs based on edge provisioning functions 1050. The functionality of the edge nodes 1022, 1024 to provide coordinated operation for applications and services, among multiple tenants, occurs based on orchestration functions 1060.

It should be understood that some of the devices in 1010 are multi-tenant devices where Tenant 1 may function within a tenant1 'slice' while a Tenant 2 may function within a tenant2 slice (and, in further examples, additional or sub-tenants may exist; and each tenant may even be specifically entitled and transactionally tied to a specific set of features all the way down to specific hardware features). A trusted multi-tenant device may further contain a tenant specific cryptographic key such that the combination of key and slice may be considered a "root of trust" (RoT) or tenant specific RoT. A RoT may further be computed or dynamically composed using a DICE (Device Identity Composition Engine) architecture such that a single DICE hardware building block may be used to construct layered trusted computing base contexts for layering of device capabilities (such as a Field Programmable Gate Array (FPGA)). The RoT may further be used for a trusted computing context to enable a "fan-out" that is useful for supporting multi-tenancy. Within a multi-tenant environment, the respective edge nodes 1022, 1024 may operate as loadable security module (LSM) or security feature enforcement points for local resources allocated to multiple tenants per node. Additionally, tenant runtime and application execution (e.g., in instances 1032, 1034) may serve as an enforcement point for an LSM or other security feature that creates a virtual edge abstraction of resources spanning potentially multiple physical hosting platforms. Finally, the orchestration functions 1060 at an orchestration entity may operate as an LSM or security feature enforcement point for marshalling resources along tenant boundaries.

Edge computing nodes may partition resources (memory, CPU, GPU, interrupt controller, I/O controller, memory controller, bus controller, etc.) where respective partitionings may contain a RoT capability and where fan-out and layering according to a DICE model may further be applied to Edge Nodes. Cloud computing nodes consisting of containers, FaaS engines, Servlets, servers, or other computation abstraction may be partitioned according to a DICE layering and fan-out structure to support a RoT context for each. Accordingly, the respective RoTs spanning devices 1010, 1022, and 1040 may coordinate the establishment of a distributed trusted computing base (DTCB) such that a tenant-specific virtual trusted secure channel linking all elements end to end can be established.

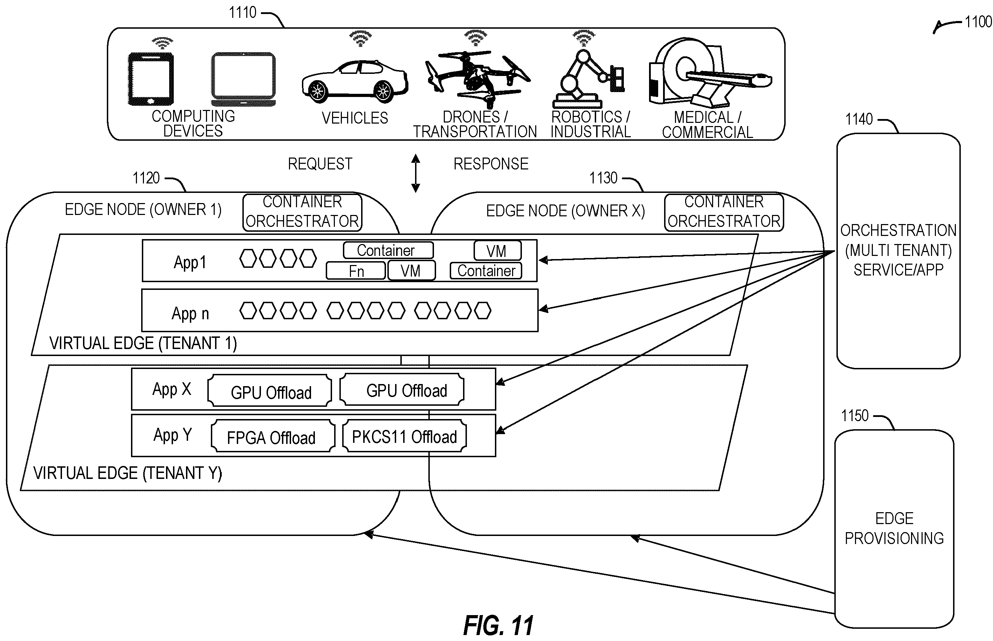

In the example of **FIG.** 11, an edge computing system 1100 is extended to provide for orchestration of multiple applications through the use of containers (a contained, deployable unit of software that provides code and needed dependencies) in a multi-owner, multi-tenant environment. A multi-tenant orchestrator may be used to perform key management, trust anchor management, and other security functions related to the provisioning and lifecycle of the trusted 'slice' concept in **FIG.** 10. An orchestrator may use a DICE layering and fan-out construction to create a root of trust context that is tenant specific. Thus, orchestration functions 1140, provided by an orchestrator discussed below, may participate as a tenant-specific orchestration provider.

Similar to the scenario of **FIG.** 10, the edge computing system 1100 is configured to fulfill requests and responses for various client endpoints 1110 from multiple virtual edge instances (and, from a cloud or remote data center, not shown). The use of these virtual edge instances supports multiple tenants and multiple applications (e.g., augmented reality (AR)/virtual reality (VR), enterprise applications, content delivery, gaming, compute offload) simultaneously. Further, there may be multiple types of applications within the virtual edge instances (e.g., normal applications; latency sensitive applications; latency-critical applications; user plane applications; networking applications; etc.). The virtual edge instances may also be spanned across systems of multiple owners at different geographic locations (or, respective computing systems and resources which are co-owned or co-managed by multiple owners).

Within the edge cloud, a first edge node 1120 (operated by a first owner) and a second edge node 1130 (operated by a second owner) respectively operate an orchestrator to coordinate the execution of various applications within the virtual edge instances offered for respective tenants. The edge nodes 1120, 1130 are coordinated based on edge provisioning functions 1150, while the operation of the various applications are coordinated with orchestration functions 1140. Furthermore, the orchestrator may identify specific hardware features that are offered to one owner but hidden from a second owner, however offered across the ownership boundaries in order to ensure that services complete according to their SLA(s). Accordingly, the virtual edge, container orchestrator, and service/app orchestrator may provide an LSM or other security enforcement point, for node-specific resources tied to specific tenants.

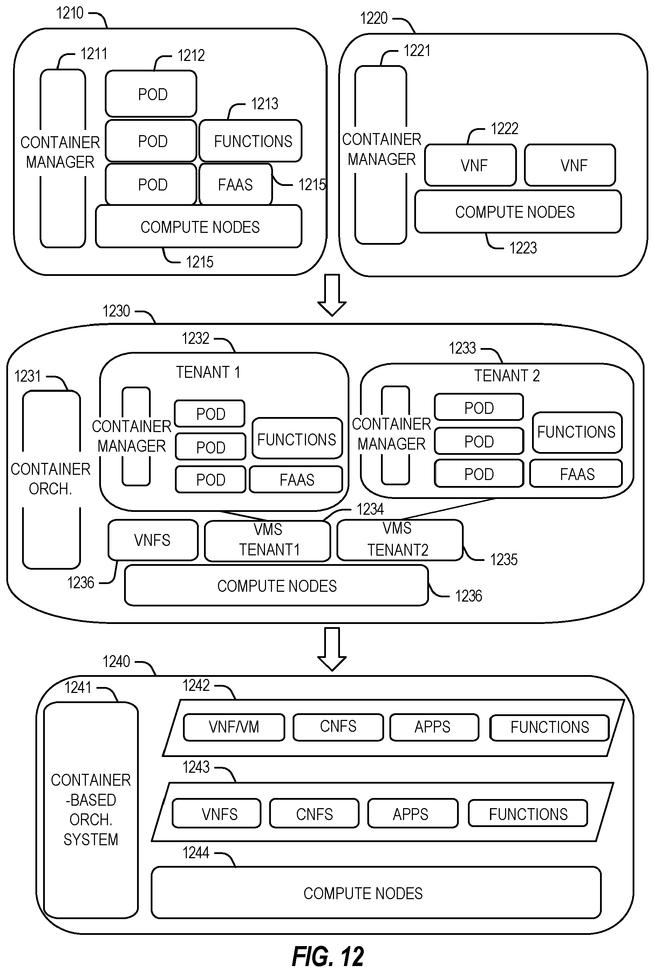

**FIG. 12** illustrates various compute arrangements deploying containers in an edge computing system. As a simplified example, system arrangements 1210, 1220 depict settings in which a container manager (e.g., container managers 1211, 1221, 1231) is adapted to launch containerized pods, functions, and functions-as-a-service instances through execution via compute nodes (1215 in arrangement 1210), or to separately execute containerized virtualized network functions through execution via compute nodes (1223 in arrangement 1220). This arrangement is adapted for use of multiple tenants in system arrangement 1230 (using compute nodes 1236), where containerized pods (e.g., pods 1212), functions (e.g., functions 1213, VNFs 1222, 1236), and functions-as-a-service instances (e.g., FaaS instance 1215) are launched within virtual machines (e.g., VMs 1234, 1235 for tenants 1232, 1233) specific to respective tenants (aside the execution of virtualized network functions). This arrangement is further adapted for use in system arrangement 1240, which provides containers 1242, 1243, or execution of the various functions, applications, and functions on compute nodes 1244, as coordinated by a container-based orchestration system 1241.

The system arrangements of depicted in **FIGS. 11-12** provide an architecture that treats VMs, Containers, and Functions equally in terms of application composition (and resulting applications are combinations of these three ingredients). Each ingredient may involve use of one or more accelerator (FPGA, ASIC) components as a local backend. In this manner, applications can be split across multiple edge owners, coordinated by an orchestrator.

In the context of **FIG. 12****,** the container manager, container orchestrator, and individual nodes may provide an LSM or other security enforcement point. However in either of the configurations of **FIGS. 11** - **12****,** tenant isolation may be orchestrated where the resources allocated to a tenant are distinct from resources allocated to a second tenant, but edge owners cooperate to ensure resource allocations are not shared across tenant boundaries. Or, resource allocations could be isolated across tenant boundaries, as tenants could allow "use" via a subscription or transaction/contract basis. In these contexts, virtualization, containerization, enclaves and hardware partitioning schemes may be used by Edge owners to enforce tenancy. Other isolation environments may include: bare metal (dedicated) equipment, virtual machines, containers, virtual machines on containers, or combinations thereof. Functions, such as those provided in a FaaS environment, discussed further below, may run in any of these isolation environments to enforce tenant boundaries.

### Example Computing Systems, Platforms, and Devices

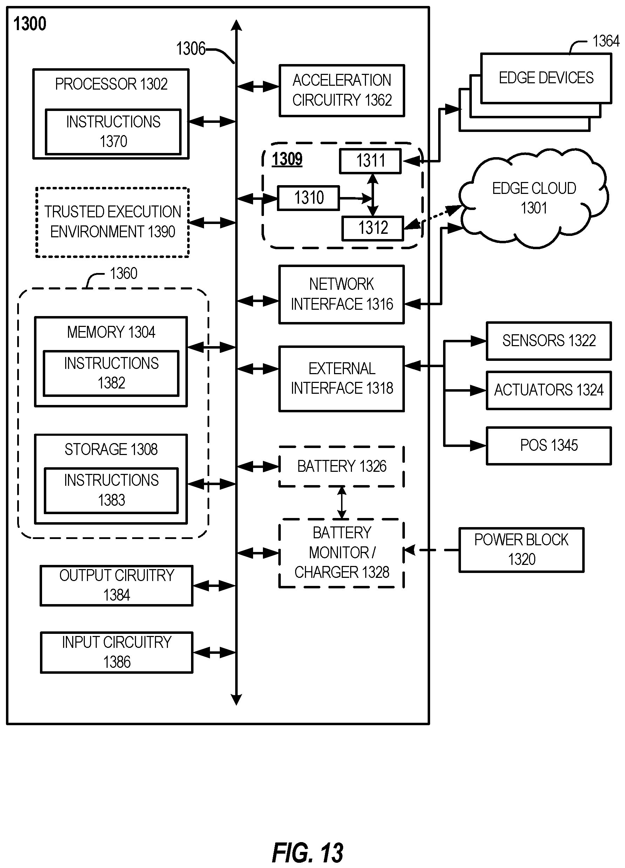

**FIG. 13** illustrates an example of a computing platform 1300 (also referred to as "system 1300," "device 1300," "appliance 1300," or the like) in accordance with various embodiments. Platform 1300 may also be implemented in or as a server computer system or some other element, device, or system discussed herein. The platform 1300 may include any combinations of the components shown in the example. The components of platform 1300 may be implemented as integrated circuits (ICs), portions thereof, discrete electronic devices, or other modules, logic, hardware, software, firmware, or a combination thereof adapted in the computer platform 1300, or as components otherwise incorporated within a chassis of a larger system. The example of **FIG.** 13 is intended to show a high level view of components of the computer platform 1300. However, some of the components shown may be omitted, additional components may be present, and different arrangement of the components shown may occur in other implementations.

The platform 1300 includes processor circuitry 1302. The processor circuitry 1302 includes circuitry such as, but not limited to one or more processor cores and one or more of cache memory, low drop-out voltage regulators (LDOs), interrupt controllers, serial interfaces such as SPI, I2C or universal programmable serial interface circuit, real time clock (RTC), timer-counters including interval and watchdog timers, general purpose I/O, memory card controllers such as secure digital/multi-media card (SD/MMC) or similar, interfaces, mobile industry processor interface (MIPI) interfaces and Joint Test Access Group (JTAG) test access ports. In some implementations, the processor circuitry 1302 may include one or more hardware accelerators 1362, which may be microprocessors, programmable processing devices (e.g., FPGA, ASIC, etc.), or the like. The one or more hardware accelerators 1362 may include, for example, computer vision and/or deep learning accelerators. In some implementations, the processor circuitry 1302 may include on-chip memory circuitry, which may include any suitable volatile and/or non-volatile memory, such as DRAM, SRAM, EPROM, EEPROM, Flash memory, solid-state memory, and/or any other type of memory device technology, such as those discussed herein.

The processor(s) of processor circuitry 1302 may include, for example, one or more processor cores (CPUs), application processors, GPUs, RISC processors, Acorn RISC Machine (ARM) processors, CISC processors, one or more DSPs, one or more FPGAs, one or more PLDs, one or more ASICs, one or more baseband processors, one or more radio-frequency integrated circuits (RFIC), one or more microprocessors or controllers, or any suitable combination thereof. The processors (or cores) of the processor circuitry 1302 may be coupled with or may include memory/storage and may be configured to execute instructions stored in the memory/storage to enable various applications or operating systems to run on the platform 1300. In these embodiments, the processors (or cores) of the processor circuitry 1302 is configured to operate application software to provide a specific service to a user of the platform 1300. In some embodiments, the processor circuitry 1302 may be a special-purpose processor/controller to operate according to the various embodiments herein.

As examples, the processor circuitry 1302 may include an Intel^{®} Architecture Core^{™} based processor such as an i3, an i5, an i7, an i9 based processor; an Intel^{®} microcontroller-based processor such as a Quark^{™}, an Atom^{™}, or other MCU-based processor; Pentium^{®} processor(s), Xeon^{®} processor(s), or another such processor available from Intel^{®} Corporation, Santa Clara, California. However, any number other processors may be used, such as one or more of Advanced Micro Devices (AMD) Zen^{®} Architecture such as Ryzen^{®} or EPYC^{®} processor(s), Accelerated Processing Units (APUs), MxGPUs, Epyc^{®} processor(s), or the like; A5-A12 and/or S1-S4 processor(s) from Apple^{®} Inc., Snapdragon^{™} or Centriq^{™} processor(s) from Qualcomm^{®} Technologies, Inc., Texas Instruments, Inc.^{®} Open Multimedia Applications Platform (OMAP)^{™} processor(s); a MIPS-based design from MIPS Technologies, Inc. such as MIPS Warrior M-class, Warrior I-class, and Warrior P-class processors; an ARM-based design licensed from ARM Holdings, Ltd., such as the ARM Cortex-A, Cortex-R, and Cortex-M family of processors; the ThunderX2^{®} provided by Cavium^{™}, Inc.; or the like. In some implementations, the processor circuitry 1302 may be a part of a system on a chip (SoC), System-in-Package (SiP), a multi-chip package (MCP), and/or the like, in which the processor circuitry 1302 and other components are formed into a single integrated circuit, or a single package, such as the Edison^{™} or Galileo^{™} SoC boards from Intel^{®} Corporation. Other examples of the processor circuitry 1302 are mentioned elsewhere in the present disclosure.

Additionally or alternatively, processor circuitry 1302 may include circuitry such as, but not limited to, one or more FPDs such as FPGAs and the like; PLDs such as CPLDs, HCPLDs, and the like; ASICs such as structured ASICs and the like; PSoCs; and the like. In such embodiments, the circuitry of processor circuitry 1302 may comprise logic blocks or logic fabric including and other interconnected resources that may be programmed to perform various functions, such as the procedures, methods, functions, etc. of the various embodiments discussed herein. In such embodiments, the circuitry of processor circuitry 1302 may include memory cells (e.g., EPROM, EEPROM, flash memory, static memory (e.g., SRAM, anti-fuses, etc.) used to store logic blocks, logic fabric, data, etc. in LUTs and the like.

The processor circuitry 1302 may communicate with system memory circuitry 1304 over an interconnect 1306 (e.g., a bus). Any number of memory devices may be used to provide for a given amount of system memory. As examples, the memory circuitry 1304 may be random access memory (RAM) in accordance with a Joint Electron Devices Engineering Council (JEDEC) design such as the DDR or mobile DDR standards (e.g., LPDDR, LPDDR2, LPDDR3, or LPDDR4), dynamic RAM (DRAM), and/or synchronous DRAM (SDRAM)). The memory circuitry 1304 may also include nonvolatile memory (NVM) such as high-speed electrically erasable memory (commonly referred to as "flash memory"), phase change RAM (PRAM), resistive memory such as magnetoresistive random access memory (MRAM), etc., and may incorporate three-dimensional (3D) cross-point (XPOINT) memories from Intel^{®} and Micron^{®}. The memory circuitry 1304 may also comprise persistent storage devices, which may be temporal and/or persistent storage of any type, including, but not limited to, non-volatile memory, optical, magnetic, and/or solid state mass storage, and so forth.

The individual memory devices of memory circuitry 1304 may be implemented as one or more of solder down packaged integrated circuits, socketed memory modules, and plug-in memory cards. The memory circuitry 1304 may be implemented as any number of different package types such as single die package (SDP), dual die package (DDP) or quad die package (Q17P). These devices, in some examples, may be directly soldered onto a motherboard to provide a lower profile solution, while in other examples the devices are configured as one or more memory modules that in turn couple to the motherboard by a given connector. Any number of other memory implementations may be used, such as other types of memory modules, e.g., dual inline memory modules (DIMMs) of different varieties including but not limited to microDIMMs or MiniDIMMs. In embodiments, the memory circuitry 1304 may be disposed in or on a same die or package as the processor circuitry 1302 (e.g., a same SoC, a same SiP, or soldered on a same MCP as the processor circuitry 1302).

To provide for persistent storage of information such as data, applications, operating systems (OS), and so forth, a storage circuitry 1308 may also couple to the processor circuitry 1302 via the interconnect 1306. In an example, the storage circuitry 1308 may be implemented via a solid-state disk drive (SSDD). Other devices that may be used for the storage circuitry 1308 include flash memory cards, such as SD cards, microSD cards, xD picture cards, and the like, and USB flash drives. In low power implementations, the storage circuitry 1308 may be on-die memory or registers associated with the processor circuitry 1302. However, in some examples, the storage circuitry 1308 may be implemented using a micro hard disk drive (HDD). Further, any number of new technologies may be used for the storage circuitry 1308 in addition to, or instead of, the technologies described, such resistance change memories, phase change memories, holographic memories, or chemical memories, among others.

The storage circuitry 1308 store computational logic 1383 (or "modules 1383") in the form of software, firmware, or hardware commands to implement the techniques described herein. The computational logic 1383 may be employed to store working copies and/or permanent copies of computer programs, or data to create the computer programs, for the operation of various components of platform 1300 (e.g., drivers, etc.), an OS of platform 1300 and/or one or more applications for carrying out the embodiments discussed herein. The computational logic 1383 may be stored or loaded into memory circuitry 1304 as instructions 1382, or data to create the instructions 1382, for execution by the processor circuitry 1302 to provide the functions described herein. The various elements may be implemented by assembler instructions supported by processor circuitry 1302 or high-level languages that may be compiled into such instructions (e.g., instructions 1370, or data to create the instructions 1370). The permanent copy of the programming instructions may be placed into persistent storage devices of storage circuitry 1308 in the factory or in the field through, for example, a distribution medium (not shown), through a communication interface (e.g., from a distribution server (not shown)), or over-the-air (OTA).

In an example, the instructions 1382 provided via the memory circuitry 1304 and/or the storage circuitry 1308 of **FIG.** 13 are embodied as one or more non-transitory computer readable storage media (see e.g., NTCRSM 1360) including program code, a computer program product or data to create the computer program, with the computer program or data, to direct the processor circuitry 1302 of platform 1300 to perform electronic operations in the platform 1300, and/or to perform a specific sequence or flow of actions, for example, as described with respect to the flowchart(s) and block diagram(s) of operations and functionality depicted previously. The processor circuitry 1302 accesses the one or more non-transitory computer readable storage media over the interconnect 1306.

In alternate embodiments, programming instructions (or data to create the instructions) may be disposed on multiple NTCRSM 1360. In alternate embodiments, programming instructions (or data to create the instructions) may be disposed on computer-readable transitory storage media, such as, signals. The instructions embodied by a machine-readable medium may further be transmitted or received over a communications network using a transmission medium via a network interface device utilizing any one of a number of transfer protocols (e.g., HTTP). Any combination of one or more computer usable or computer readable medium(s) may be utilized. The computer-usable or computer-readable medium may be, for example but not limited to, one or more electronic, magnetic, optical, electromagnetic, infrared, or semiconductor systems, apparatuses, devices, or propagation media. For instance, the NTCRSM 1360 may be embodied by devices described for the storage circuitry 1308 and/or memory circuitry 1304. More specific examples (a non- exhaustive list) of a computer-readable medium would include the following: an electrical connection having one or more wires, a portable computer diskette, a hard disk, a random access memory (RAM), a read-only memory (ROM), an erasable programmable read-only memory (EPROM, Flash memory, etc.), an optical fiber, a portable compact disc read-only memory (CD-ROM), an optical storage device and/or optical disks, a transmission media such as those supporting the Internet or an intranet, a magnetic storage device, or any number of other hardware devices. Note that the computer-usable or computer-readable medium could even be paper or another suitable medium upon which the program (or data to create the program) is printed, as the program (or data to create the program) can be electronically captured, via, for instance, optical scanning of the paper or other medium, then compiled, interpreted, or otherwise processed in a suitable manner, if necessary, and then stored in a computer memory (with or without having been staged in or more intermediate storage media). In the context of this document, a computer-usable or computer-readable medium may be any medium that can contain, store, communicate, propagate, or transport the program (or data to create the program) for use by or in connection with the instruction execution system, apparatus, or device. The computer-usable medium may include a propagated data signal with the computer-usable program code (or data to create the program code) embodied therewith, either in baseband or as part of a carrier wave. The computer usable program code (or data to create the program) may be transmitted using any appropriate medium, including but not limited to wireless, wireline, optical fiber cable, RF, etc.

In various embodiments, the program code (or data to create the program code) described herein may be stored in one or more of a compressed format, an encrypted format, a fragmented format, a packaged format, etc. Program code (or data to create the program code) as described herein may require one or more of installation, modification, adaptation, updating, combining, supplementing, configuring, decryption, decompression, unpacking, distribution, reassignment, etc. in order to make them directly readable and/or executable by a computing device and/or other machine. For example, the program code (or data to create the program code) may be stored in multiple parts, which are individually compressed, encrypted, and stored on separate computing devices, wherein the parts when decrypted, decompressed, and combined form a set of executable instructions that implement the program code (the data to create the program code such as that described herein. In another example, the Program code (or data to create the program code) may be stored in a state in which they may be read by a computer, but require addition of a library (e.g., a dynamic link library), a software development kit (SDK), an application programming interface (API), etc. in order to execute the instructions on a particular computing device or other device. In another example, the program code (or data to create the program code) may need to be configured (e.g., settings stored, data input, network addresses recorded, etc.) before the program code (or data to create the program code) can be executed/used in whole or in part. In this example, the program code (or data to create the program code) may be unpacked, configured for proper execution, and stored in a first location with the configuration instructions located in a second location distinct from the first location. The configuration instructions can be initiated by an action, trigger, or instruction that is not collocated in storage or execution location with the instructions enabling the disclosed techniques. Accordingly, the disclosed program code (or data to create the program code) are intended to encompass such machine readable instructions and/or program(s) (or data to create such machine readable instruction and/or programs) regardless of the particular format or state of the machine readable instructions and/or program(s) when stored or otherwise at rest or in transit.

Computer program code for carrying out operations of the present disclosure (e.g., computational logic 1383, instructions 1382, 1370 discussed previously) may be written in any combination of one or more programming languages, including an object oriented programming language such as Python, Ruby, Scala, Smalltalk, Java^{™}, C++, C#, or the like; a procedural programming languages, such as the "C" programming language, the Go (or "Golang") programming language, or the like; a scripting language such as JavaScript, Server-Side JavaScript (SSJS), JQuery, PHP, Pearl, Python, Ruby on Rails, Accelerated Mobile Pages Script (AMPscript), Mustache Template Language, Handlebars Template Language, Guide Template Language (GTL), PHP, Java and/or Java Server Pages (JSP), Node.js, ASP.NET, JAMscript, and/or the like; a markup language such as Hypertext Markup Language (HTML), Extensible Markup Language (XML), Java Script Object Notion (JSON), Apex^{®}, Cascading Stylesheets (CSS), JavaServer Pages (JSP), MessagePack^{™}, Apache^{®} Thrift, Abstract Syntax Notation One (ASN.1), Google^{®} Protocol Buffers (protobuf), or the like; some other suitable programming languages including proprietary programming languages and/or development tools, or any other languages tools. The computer program code for carrying out operations of the present disclosure may also be written in any combination of the programming languages discussed herein. The program code may execute entirely on the system 1300, partly on the system 1300, as a stand-alone software package, partly on the system 1300 and partly on a remote computer or entirely on the remote computer or server. In the latter scenario, the remote computer may be connected to the system 1300 through any type of network, including a LAN or WAN, or the connection may be made to an external computer (e.g., through the Internet using an Internet Service Provider).

In an example, the instructions 1370 on the processor circuitry 1302 (separately, or in combination with the instructions 1382 and/or logic/modules 1383 stored in computer-readable storage media) may configure execution or operation of a trusted execution environment (TEE) 1390. The TEE 1390 operates as a protected area accessible to the processor circuitry 1302 to enable secure access to data and secure execution of instructions. In some embodiments, the TEE 1390 may be a physical hardware device that is separate from other components of the system 1300 such as a secure-embedded controller, a dedicated SoC, or a tamper-resistant chipset or microcontroller with embedded processing devices and memory devices. Examples of such embodiments include a Desktop and mobile Architecture Hardware (DASH) compliant Network Interface Card (NIC), Intel^{®} Management/Manageability Engine, Intel^{®} Converged Security Engine (CSE) or a Converged Security Management/Manageability Engine (CSME), Trusted Execution Engine (TXE) provided by Intel^{®} each of which may operate in conjunction with Intel^{®} Active Management Technology (AMT) and/or Intel^{®} vPro^{™} Technology; AMD^{®} Platform Security coProcessor (PSP), AMD^{®} PRO A-Series Accelerated Processing Unit (APU) with DASH manageability, Apple^{®} Secure Enclave coprocessor; IBM^{®} Crypto Express3^{®}, IBM^{®} 4807, 4808, 4809, and/or 4765 Cryptographic Coprocessors, IBM^{®} Baseboard Management Controller (BMC) with Intelligent Platform Management Interface (IPMI), Dell^{™} Remote Assistant Card II (DRAC II), integrated Dell^{™} Remote Assistant Card (iDRAC), and the like.

In other embodiments, the TEE 1390 may be implemented as secure enclaves, which are isolated regions of code and/or data within the processor and/or memory/storage circuitry of the system 1300. Only code executed within a secure enclave may access data within the same secure enclave, and the secure enclave may only be accessible using the secure application (which may be implemented by an application processor or a tamper-resistant microcontroller). Various implementations of the TEE 1390, and an accompanying secure area in the processor circuitry 1302 or the memory circuitry 1304 and/or storage circuitry 1308 may be provided, for instance, through use of Intel^{®} Software Guard Extensions (SGX), ARM^{®} TrustZone^{®} hardware security extensions, Keystone Enclaves provided by Oasis Labs^{™}, and/or the like. Other aspects of security hardening, hardware roots-of-trust, and trusted or protected operations may be implemented in the device 1300 through the TEE 1390 and the processor circuitry 1302.

In some embodiments, the memory circuitry 1304 and/or storage circuitry 1308 may be divided into isolated user-space instances such as containers, partitions, virtual environments (VEs), etc. The isolated user-space instances may be implemented using a suitable OS-level virtualization technology such as Docker^{®} containers, Kubernetes^{®} containers, Solaris^{®} containers and/or zones, OpenVZ^{®} virtual private servers, DragonFly BSD^{®} virtual kernels and/or jails, chroot jails, and/or the like. Virtual machines could also be used in some implementations. In some embodiments, the memory circuitry 1304 and/or storage circuitry 1308 may be divided into one or more trusted memory regions for storing applications or software modules of the TEE 1390.

Although the instructions 1382 are shown as code blocks included in the memory circuitry 1304 and the computational logic 1383 is shown as code blocks in the storage circuitry 1308, it should be understood that any of the code blocks may be replaced with hardwired circuits, for example, built into an FPGA, ASIC, or some other suitable circuitry. For example, where processor circuitry 1302 includes (e.g., FPGA based) hardware accelerators as well as processor cores, the hardware accelerators (e.g., the FPGA cells) may be pre-configured (e.g., with appropriate bit streams) with the aforementioned computational logic to perform some or all of the functions discussed previously (in lieu of employment of programming instructions to be executed by the processor core(s)).

The memory circuitry 1304 and/or storage circuitry 1308 may store program code of an operating system (OS), which may be a general purpose OS or an OS specifically written for and tailored to the computing platform 1300. For example, the OS may be Unix or a Unix-like OS such as Linux e.g., provided by Red Hat Enterprise, Windows 10^{™} provided by Microsoft Corp.^{®}, macOS provided by Apple Inc.^{®}, or the like. In another example, the OS may be a mobile OS, such as Android^{®} provided by Google Inc.^{®}, iOS^{®} provided by Apple Inc.^{®}, Windows 10 Mobile^{®} provided by Microsoft Corp.^{®}, KaiOS provided by KaiOS Technologies Inc., or the like. In another example, the OS may be a real-time OS (RTOS), such as Apache Mynewt provided by the Apache Software Foundation^{®}, Windows 10 For IoT^{®} provided by Microsoft Corp.^{®}, MicroController Operating Systems ("MicroC/OS" or "µC/OS") provided by Micrium^{®}, Inc., FreeRTOS, VxWorks^{®} provided by Wind River Systems, Inc.^{®}, PikeOS provided by Sysgo AG^{®}, Android Things^{®} provided by Google Inc.^{®}, QNX^{®} RTOS provided by BlackBerry Ltd., or any other suitable RTOS, such as those discussed herein.

The OS may include one or more drivers that operate to control particular devices that are embedded in the platform 1300, attached to the platform 1300, or otherwise communicatively coupled with the platform 1300. The drivers may include individual drivers allowing other components of the platform 1300 to interact or control various I/O devices that may be present within, or connected to, the platform 1300. For example, the drivers may include a display driver to control and allow access to a display device, a touchscreen driver to control and allow access to a touchscreen interface of the platform 1300, sensor drivers to obtain sensor readings of sensor circuitry 1321 and control and allow access to sensor circuitry 1321, actuator drivers to obtain actuator positions of the actuators 1322 and/or control and allow access to the actuators 1322, a camera driver to control and allow access to an embedded image capture device, audio drivers to control and allow access to one or more audio devices. The OSs may also include one or more libraries, drivers, APIs, firmware, middleware, software glue, etc., which provide program code and/or software components for one or more applications to obtain and use the data from a secure execution environment, trusted execution environment, and/or management engine of the platform 1300 (not shown).

The components may communicate over the IX 1306. The IX 1306 may include any number of technologies, including ISA, extended ISA, I2C, SPI, point-to-point interfaces, power management bus (PMBus), PCI, PCIe, PClx, Intel^{®} UPI, Intel^{®} Accelerator Link, Intel^{®} CXL, CAPI, OpenCAPI, Intel^{®} QPI, UPI, Intel^{®} OPA IX, RapidIO^{™} system IXs, CCIX, Gen-Z Consortium IXs, a HyperTransport interconnect, NVLink provided by NVIDIA^{®}, a Time-Trigger Protocol (TTP) system, a FlexRay system, and/or any number of other IX technologies. The IX 1306 may be a proprietary bus, for example, used in a SoC based system.

The interconnect 1306 couples the processor circuitry 1302 to the communication circuitry 1309 for communications with other devices. The communication circuitry 1309 is a hardware element, or collection of hardware elements, used to communicate over one or more networks (e.g., cloud 1301) and/or with other devices (e.g., mesh devices/fog 1364). The communication circuitry 1309 includes baseband circuitry 1310 (or "modem 1310") and RF circuitry 1311 and 1312.

The baseband circuitry 1310 includes one or more processing devices (e.g., baseband processors) to carry out various protocol and radio control functions. Baseband circuitry 1310 may interface with application circuitry of platform 1300 (e.g., a combination of processor circuitry 1302, memory circuitry 1304, and/or storage circuitry 1308) for generation and processing of baseband signals and for controlling operations of the RF circuitry 1311 or 1312. The baseband circuitry 1310 may handle various radio control functions that enable communication with one or more radio networks via the RF circuitry 1311 or 1312. The baseband circuitry 1310 may include circuitry such as, but not limited to, one or more single-core or multicore processors (e.g., one or more baseband processors) or control logic to process baseband signals received from a receive signal path of the RF circuitry 1311 and/or 1312, and to generate baseband signals to be provided to the RF circuitry 1311 or 1312 via a transmit signal path. In various embodiments, the baseband circuitry 1310 may implement an RTOS to manage resources of the baseband circuitry 1310, schedule tasks, etc. Examples of the RTOS may include Operating System Embedded (OSE)^{™} provided by Enea^{®}, Nucleus RTOS^{™} provided by Mentor Graphics^{®}, Versatile Real-Time Executive (VRTX) provided by Mentor Graphics^{®}, ThreadX^{™} provided by Express Logic^{®}, FreeRTOS, REX OS provided by Qualcomm^{®}, OKL4 provided by Open Kernel (OK) Labs^{®}, or any other suitable RTOS, such as those discussed herein.

Although not shown by **FIG. 13****,** in one embodiment, the baseband circuitry 1310 includes individual processing device(s) to operate one or more wireless communication protocols (e.g., a "multi-protocol baseband processor" or "protocol processing circuitry") and individual processing device(s) to implement PHY functions. In this embodiment, the protocol processing circuitry operates or implements various protocol layers/entities of one or more wireless communication protocols. In a first example, the protocol processing circuitry may operate LTE protocol entities and/or 5G)/NR protocol entities when the communication circuitry 1309 is a cellular radiofrequency communication system, such as millimeter wave (mmWave) communication circuitry or some other suitable cellular communication circuitry. In the first example, the protocol processing circuitry 1302 would operate MAC, RLC, PDCP, SDAP, RRC, and NAS functions. In a second example, the protocol processing circuitry may operate one or more IEEE-based protocols when the communication circuitry 1309 is WiFi communication system. In the second example, the protocol processing circuitry would operate WiFi MAC and LLC functions. The protocol processing circuitry may include one or more memory structures (not shown) to store program code and data for operating the protocol functions, as well as one or more processing cores (not shown) to execute the program code and perform various operations using the data. The protocol processing circuitry provides control functions for the baseband circuitry 1310 and/or RF circuitry 1311 and 1312. The baseband circuitry 1310 may also support radio communications for more than one wireless protocol.

Continuing with the aforementioned embodiment, the baseband circuitry 1310 includes individual processing device(s) to implement PHY including HARQ functions, scrambling and/or descrambling, (en)coding and/or decoding, layer mapping and/or de-mapping, modulation symbol mapping, received symbol and/or bit metric determination, multi-antenna port pre-coding and/or decoding which may include one or more of space-time, space-frequency or spatial coding, reference signal generation and/or detection, preamble sequence generation and/or decoding, synchronization sequence generation and/or detection, control channel signal blind decoding, radio frequency shifting, and other related functions. etc. The modulation/demodulation functionality may include Fast-Fourier Transform (FFT), precoding, or constellation mapping/demapping functionality. The (en)coding/decoding functionality may include convolution, tail-biting convolution, turbo, Viterbi, or Low Density Parity Check (LDPC) coding. Embodiments of modulation/demodulation and encoder/decoder functionality are not limited to these examples and may include other suitable functionality in other embodiments.

The communication circuitry 1309 also includes RF circuitry 1311 and 1312 to enable communication with wireless networks using modulated electromagnetic radiation through a non-solid medium. Each of the RF circuitry 1311 and 1312 include a receive signal path, which may include circuitry to convert analog RF signals (e.g., an existing or received modulated waveform) into digital baseband signals to be provided to the baseband circuitry 1310. Each of the RF circuitry 1311 and 1312 also include a transmit signal path, which may include circuitry configured to convert digital baseband signals provided by the baseband circuitry 1310 to be converted into analog RF signals (e.g., modulated waveform) that will be amplified and transmitted via an antenna array including one or more antenna elements (not shown). The antenna array may be a plurality of microstrip antennas or printed antennas that are fabricated on the surface of one or more printed circuit boards. The antenna array may be formed in as a patch of metal foil (e.g., a patch antenna) in a variety of shapes, and may be coupled with the RF circuitry 1311 or 1312 using metal transmission lines or the like.

The RF circuitry 1311 (also referred to as a "mesh transceiver") is used for communications with other mesh or fog devices 1364. The mesh transceiver 1311 may use any number of frequencies and protocols, such as 2.4 GHz transmissions under the IEEE 802.15.4 standard, using the Bluetooth^{®} low energy (BLE) standard, as defined by the Bluetooth^{®} Special Interest Group, or the ZigBee^{®} standard, among others. Any number of RF circuitry 1311, configured for a particular wireless communication protocol, may be used for the connections to the mesh devices 1364. For example, a WLAN unit may be used to implement WiFi^{™} communications in accordance with the IEEE 802.11 standard. In addition, wireless wide area communications, for example, according to a cellular or other wireless wide area protocol, may occur via a WWAN unit.

The mesh transceiver 1311 may communicate using multiple standards or radios for communications at different ranges. For example, the platform 1300 may communicate with close/proximate devices, e.g., within about 10 meters, using a local transceiver based on BLE, or another low power radio, to save power. More distant mesh devices 1364, e.g., within about 50 meters, may be reached over ZigBee or other intermediate power radios. Both communications techniques may take place over a single radio at different power levels, or may take place over separate transceivers, for example, a local transceiver using BLE and a separate mesh transceiver using ZigBee.

The RF circuitry 1312 (also referred to as a "wireless network transceiver," a "cloud transceiver," or the like) may be included to communicate with devices or services in the cloud 1301 via local or wide area network protocols. The wireless network transceiver 1312 includes one or more radios to communicate with devices in the cloud 1301. The cloud 1301 may be the same or similar to cloud 144 discussed previously. The wireless network transceiver 1312 may be a LPWA transceiver that follows the IEEE 802.15.4, or IEEE 802.15.4g standards, among others, such as those discussed herein. The platform 1300 may communicate over a wide area using LoRaWAN^{™} (Long Range Wide Area Network) developed by Semtech and the LoRa Alliance. The techniques described herein are not limited to these technologies, but may be used with any number of other cloud transceivers that implement long range, low bandwidth communications, such as Sigfox, and other technologies. Further, other communications techniques, such as time-slotted channel hopping, described in the IEEE 1002.15.4e specification may be used.

Any number of other radio communications and protocols may be used in addition to the systems mentioned for the mesh transceiver 1311 and wireless network transceiver 1312, as described herein. For example, the radio transceivers 1311 and 1312 may include an LTE or other cellular transceiver that uses spread spectrum (SPA/SAS) communications for implementing high-speed communications. Further, any number of other protocols may be used, such as WiFi^{®} networks for medium speed communications and provision of network communications.

The transceivers 1311 and 1312 may include radios that are compatible with, and/or may operate according to any one or more of the following radio communication technologies and/or standards including but not limited to those discussed herein.

Network interface circuitry/controller (NIC) 1316 may be included to provide wired communication to the cloud 1301 or to other devices, such as the mesh devices 1364 using a standard network interface protocol. The standard network interface protocol may include Ethernet, Ethernet over GRE Tunnels, Ethernet over Multiprotocol Label Switching (MPLS), Ethernet over USB, or may be based on other types of network protocols, such as Controller Area Network (CAN), Local Interconnect Network (LIN), DeviceNet, ControlNet, Data Highway+, PROFIBUS, or PROFINET, among many others. Network connectivity may be provided to/from the platform 1300 via NIC 1316 using a physical or wired connection, such as electrical (e.g., a "copper interconnect"), optical (e.g., fiber optics, and/or any other type of conductive or transmissive physical communication medium. The physical connection also includes suitable input connectors (e.g., ports, receptacles, sockets, etc.) and output connectors (e.g., plugs, pins, etc.). The NIC 1316 may include one or more dedicated processors and/or FPGAs to communicate using one or more of the aforementioned network interface protocols. In some implementations, the NIC 1316 may include multiple controllers to provide connectivity to other networks using the same or different protocols. For example, the platform 1300 may include a first NIC 1316 providing communications to the cloud over Ethernet and a second NIC 1316 providing communications to other devices over another type of network.

The interconnect 1306 may couple the processor circuitry 1302 to an external interface 1318 (also referred to as "I/O interface circuitry" or the like) that is used to connect external devices or subsystems. The external devices include, inter alia, sensor circuitry 1321, actuators 1322, and positioning circuitry 1345.

The sensor circuitry 1321 may include devices, modules, or subsystems whose purpose is to detect events or changes in its environment and send the information (sensor data) about the detected events to some other a device, module, subsystem, etc. Examples of such sensors 1321 include, inter alia, inertia measurement units (IMU) comprising accelerometers, gyroscopes, and/or magnetometers; microelectromechanical systems (MEMS) or nanoelectromechanical systems (NEMS) comprising 3-axis accelerometers, 3-axis gyroscopes, and/or magnetometers; level sensors; flow sensors; temperature sensors (e.g., thermistors); pressure sensors; barometric pressure sensors; gravimeters; altimeters; image capture devices (e.g., cameras); light detection and ranging (LiDAR) sensors; proximity sensors (e.g., infrared radiation detector and the like), depth sensors, ambient light sensors, ultrasonic transceivers; microphones; etc.

The external interface 1318 connects the platform 1300 to actuators 1322, allow platform 1300 to change its state, position, and/or orientation, or move or control a mechanism or system. The actuators 1322 comprise electrical and/or mechanical devices for moving or controlling a mechanism or system, and converts energy (e.g., electric current or moving air and/or liquid) into some kind of motion. The actuators 1322 may include one or more electronic (or electrochemical) devices, such as piezoelectric biomorphs, solid state actuators, solid state relays (SSRs), shape-memory alloy-based actuators, electroactive polymer-based actuators, relay driver integrated circuits (ICs), and/or the like. The actuators 1322 may include one or more electromechanical devices such as pneumatic actuators, hydraulic actuators, electromechanical switches including electromechanical relays (EMRs), motors (e.g., DC motors, stepper motors, servomechanisms, etc.), wheels, thrusters, propellers, claws, clamps, hooks, an audible sound generator, and/or other like electromechanical components. The platform 1300 may be configured to operate one or more actuators 1322 based on one or more captured events and/or instructions or control signals received from a service provider and/or various client systems.

The positioning circuitry 1345 includes circuitry to receive and decode signals transmitted/broadcasted by a positioning network of a global navigation satellite system (GNSS). Examples of navigation satellite constellations (or GNSS) include United States' Global Positioning System (GPS), Russia's Global Navigation System (GLONASS), the European Union's Galileo system, China's BeiDou Navigation Satellite System, a regional navigation system or GNSS augmentation system (e.g., Navigation with Indian Constellation (NAVIC), Japan's Quasi-Zenith Satellite System (QZSS), France's Doppler Orbitography and Radio-positioning Integrated by Satellite (DORIS), etc.), or the like. The positioning circuitry 1345 comprises various hardware elements (e.g., including hardware devices such as switches, filters, amplifiers, antenna elements, and the like to facilitate OTA communications) to communicate with components of a positioning network, such as navigation satellite constellation nodes. In some embodiments, the positioning circuitry 1345 may include a Micro-Technology for Positioning, Navigation, and Timing (Micro-PNT) IC that uses a master timing clock to perform position tracking/estimation without GNSS assistance. The positioning circuitry 1345 may also be part of, or interact with, the communication circuitry 1309 to communicate with the nodes and components of the positioning network. The positioning circuitry 1345 may also provide position data and/or time data to the application circuitry, which may use the data to synchronize operations with various infrastructure (e.g., radio base stations), for turn-by-turn navigation, or the like. When a GNSS signal is not available or when GNSS position accuracy is not sufficient for a particular application or service, a positioning augmentation technology can be used to provide augmented positioning information and data to the application or service. Such a positioning augmentation technology may include, for example, satellite based positioning augmentation (e.g., EGNOS) and/or ground based positioning augmentation (e.g., DGPS).

In some implementations, the positioning circuitry 1345 is, or includes an INS, which is a system or device that uses sensor circuitry 1321 (e.g., motion sensors such as accelerometers, rotation sensors such as gyroscopes, and altimimeters, magnetic sensors, and/or the like to continuously calculate (e.g., using dead by dead reckoning, tria-Angulation, or the like) a position, orientation, and/or velocity (including direction and speed of movement) of the platform 1300 without the need for external references.

In some examples, various I/O devices may be present within, or connected to, the platform 1300, which are referred to as input device circuitry 1386 and output device circuitry 1384 in **FIG.** 13. The input device circuitry 1386 and output device circuitry 1384 include one or more user interfaces designed to enable user interaction with the platform 1300 and/or peripheral component interfaces designed to enable peripheral component interaction with the platform 1300. Input device circuitry 1386 may include any physical or virtual means for accepting an input including, inter alia, one or more physical or virtual buttons (e.g., a reset button), a physical keyboard, keypad, mouse, touchpad, touchscreen, microphones, scanner, headset, and/or the like.

The output device circuitry 1384 may be included to show information or otherwise convey information, such as sensor readings, actuator position(s), or other like information. Data and/or graphics may be displayed on one or more user interface components of the output device circuitry 1384. Output device circuitry 1384 may include any number and/or combinations of audio or visual display, including, inter alia, one or more simple visual outputs/indicators (e.g., binary status indicators (e.g., light emitting diodes (LEDs)) and multi-character visual outputs, or more complex outputs such as display devices or touchscreens (e.g., Liquid Chrystal Displays (LCD), LED displays, quantum dot displays, projectors, etc.), with the output of characters, graphics, multimedia objects, and the like being generated or produced from the operation of the platform 1300. The output device circuitry 1384 may also include speakers or other audio emitting devices, printer(s), and/or the like. In some embodiments, the sensor circuitry 1321 may be used as the input device circuitry 1386 (e.g., an image capture device, motion capture device, or the like) and one or more actuators 1322 may be used as the output device circuitry 1384 (e.g., an actuator to provide haptic feedback or the like). In another example, near-field communication (NFC) circuitry comprising an NFC controller coupled with an antenna element and a processing device may be included to read electronic tags and/or connect with another NFC-enabled device. Peripheral component interfaces may include, but are not limited to, a non-volatile memory port, a USB port, an audio jack, a power supply interface, etc.

A battery 1324 may be coupled to the platform 1300 to power the platform 1300, which may be used in embodiments where the platform 1300 is not in a fixed location. The battery 1324 may be a lithium ion battery, a lead-acid automotive battery, or a metal-air battery, such as a zinc-air battery, an aluminum-air battery, a lithium-air battery, a lithium polymer battery, and/or the like. In embodiments where the platform 1300 is mounted in a fixed location, the platform 1300 may have a power supply coupled to an electrical grid. In these embodiments, the platform 1300 may include power tee circuitry to provide for electrical power drawn from a network cable to provide both power supply and data connectivity to the platform 1300 using a single cable.

PMIC 1326 may be included in the platform 1300 to track the state of charge (SoCh) of the battery 1324, and to control charging of the platform 1300. The PMIC 1326 may be used to monitor other parameters of the battery 1324 to provide failure predictions, such as the state of health (SoH) and the state of function (SoF) of the battery 1324. The PMIC 1326 may include voltage regulators, surge protectors, power alarm detection circuitry. The power alarm detection circuitry may detect one or more of brown out (under-voltage) and surge (overvoltage) conditions. The PMIC 1326 may communicate the information on the battery 1324 to the processor circuitry 1302 over the interconnect 1306. The PMIC 1326 may also include an analog-to-digital (ADC) convertor that allows the processor circuitry 1302 to directly monitor the voltage of the battery 1324 or the current flow from the battery 1324. The battery parameters may be used to determine actions that the platform 1300 may perform, such as transmission frequency, mesh network operation, sensing frequency, and the like. As an example, the PMIC 1326 may be a battery monitoring integrated circuit, such as an LTC4020 or an LTC2990 from Linear Technologies, an ADT7488A from ON Semiconductor of Phoenix Arizona, or an IC from the UCD90xxx family from Texas Instruments of Dallas, TX.

A power block 1328, or other power supply coupled to a grid, may be coupled with the PMIC 1326 to charge the battery 1324. In some examples, the power block 1328 may be replaced with a wireless power receiver to obtain the power wirelessly, for example, through a loop antenna in the platform 1300. A wireless battery charging circuit, such as an LTC4020 chip from Linear Technologies of Milpitas, California, among others, may be included in the PMIC 1326. The specific charging circuits chosen depend on the size of the battery 1324, and thus, the current required. The charging may be performed using the Airfuel standard promulgated by the Airfuel Alliance, the Qi wireless charging standard promulgated by the Wireless Power Consortium, or the Rezence charging standard, promulgated by the Alliance for Wireless Power, among others.

## Claims

1. A method to be implemented on a controller node of an orchestration environment comprising a plurality of nodes, the method comprising:
obtaining metadata associated with deployment of a first container within the orchestration environment, the metadata including information indicating security preferences for deployment of the first container and a level of communications between the first container and a second container within the orchestration environment;
determining, based on the metadata, correlation information between the first container and the second container for use in making a determination to collocate the first and second containers;
receiving, from an orchestration agent executing on at least one node of the plurality of nodes, usage information indicative of resource usage associated with executing the first container and the second container;
periodically updating, during execution of the first container and the second container, the correlation information based on the received usage information;
updating the correlation information by writing updated correlation information into a shadow data structure separate from a data structure currently in use and swapping roles of the shadow data structure and the data structure currently in use without interrupting execution of a scheduler executing on the controller node;
selecting a particular node of the plurality of nodes within the orchestration environment on which to deploy the first container based on the metadata, the updated correlation information, a determination to collocate the first and second containers made based on the updated correlation information, and the security capabilities of the particular node;
deploying the first container on the selected node within the orchestration environment; and causing the selected node to instantiate a shared memory to be used for communications between the first and the second containers.

2. The method of claim 1, wherein the security preferences indicate an ordered plurality of preferred execution environments for the container deployment.

3. The method of claim 2, wherein the plurality of preferred execution environments includes an encrypted execution environment.

4. The method of claim 2 or 3, further comprising selecting one of the preferred execution environments for the container deployment based on an ability of the particular node to provide at least one of the preferred execution environments for the container deployment.

5. The method of claim 4, wherein the particular node can support multiple of the preferred execution environments and the execution environment is selected based on the ordering of the preferred execution environments.

6. The method of claim 4 or 5, further comprising instantiating a container of the selected execution environment based on an existing container of another execution environment.

7. The method of claim any one of claims 1 to 6, wherein the information includes one or more of a frequency of communication between the first container and the second container and a typical payload size for communications between the first and second containers.

8. The method of claim 1, wherein the metadata includes one or more of: a latency transfer coefficient (LTC) indicating a degree to which a response latency of the first container affects the response latency of the second container; and one or more resource saturation coefficients (RSCs), each RSC indicating a degree to which a particular compute resource used by the first container affects the particular compute resource used by the second container.

9. The method of any one of claims 1-8, wherein the container is to execute one or more applications of a microservice.

10. An apparatus comprising means to perform the method of any one of claims 1-9.

11. At least one non-transitory machine-readable storage medium having instructions stored thereon, wherein the instructions, when executed on processing circuitry of a computing device, cause the processing circuitry to perform the method of any one of claims 1-9.

## Patentansprüche

1. Verfahren, das auf einem Controller-Knoten einer Orchestrierungsumgebung, die eine Mehrzahl von Knoten umfasst, zu implementieren ist, wobei das Verfahren Folgendes umfasst:
Erhalten von mit einer Bereitstellung eines ersten Containers innerhalb der Orchestrierungsumgebung assoziierten Metadaten, wobei die Metadaten Informationen aufweisen, die Sicherheitspräferenzen für die Bereitstellung des ersten Containers und eine Ebene von Kommunikationen zwischen dem ersten Container und einem zweiten Container innerhalb der Orchestrierungsumgebung angeben;
Bestimmen, basierend auf den Metadaten, von Korrelationsinformationen zwischen dem ersten Container und dem zweiten Container zur Verwendung beim Vornehmen einer Bestimmung eines gemeinsamen Anordnens des ersten und des zweiten Containers;
Empfangen, von einem auf mindestens einem Knoten der Mehrzahl von Knoten ausgeführten Orchestrierungsagenten, von Nutzungsinformationen, die eine mit dem Ausführen des ersten Containers und des zweiten Containers assoziierte Ressourcennutzung angeben;
periodisches Aktualisieren, während der Ausführung des ersten Containers und des zweiten Containers, der Korrelationsinformationen basierend auf den empfangenen Nutzungsinformationen;
Aktualisieren der Korrelationsinformationen durch Schreiben aktualisierter Korrelationsinformationen in eine Schattendatenstruktur, die von einer gerade verwendeten Datenstruktur getrennt ist, und Tauschen von Rollen der Schattendatenstruktur und der gerade verwendeten Datenstruktur ohne Unterbrechen der Ausführung eines auf dem Controller-Knoten ausgeführten Schedulers;
Auswählen eines betreffenden Knotens der Mehrzahl von Knoten innerhalb der Orchestrierungsumgebung, auf dem der erste Container bereitzustellen ist, basierend auf den Metadaten, den aktualisierten Korrelationsinformationen, einer Bestimmung eines gemeinsamen Anordnens des ersten und des zweiten Containers, die basierend auf den aktualisierten Korrelationsinformationen vorgenommen wird, und den Sicherheitsfähigkeiten des betreffenden Knotens;
Bereitstellen des ersten Containers auf dem ausgewählten Knoten innerhalb der Orchestrierungsumgebung; und
Veranlassen, dass der ausgewählte Knoten einen gemeinsam genutzten Speicher, der für Kommunikationen zwischen dem ersten und dem zweiten Container zu verwenden ist, instanziiert.

2. Verfahren nach Anspruch 1, wobei die Sicherheitspräferenzen eine geordnete Mehrzahl bevorzugter Ausführungsumgebungen für die Containerbereitstellung angeben.

3. Verfahren nach Anspruch 2, wobei die Mehrzahl bevorzugter Ausführungsumgebungen eine verschlüsselte Ausführungsumgebung aufweist.

4. Verfahren nach Anspruch 2 oder 3, das ferner Auswählen einer der bevorzugten Ausführungsumgebungen für die Containerbereitstellung basierend auf einer Fähigkeit des betreffenden Knotens dazu, mindestens eine der bevorzugten Ausführungsumgebungen für die Containerbereitstellung zur Verfügung zu stellen, umfasst.

5. Verfahren nach Anspruch 4, wobei der betreffende Knoten mehrere der bevorzugten Ausführungsumgebungen unterstützen kann und die Ausführungsumgebung basierend auf der Reihenfolge der bevorzugten Ausführungsumgebungen ausgewählt wird.

6. Verfahren nach Anspruch 4 oder 5, das ferner Instanziieren eines Containers der ausgewählten Ausführungsumgebung basierend auf einem vorhandenen Container einer anderen Ausführungsumgebung umfasst.

7. Verfahren nach einem der Ansprüche 1 bis 6, wobei die Informationen eines oder mehrere von einer Häufigkeit der Kommunikation zwischen dem ersten Container und dem zweiten Container und einer typischen Nutzlastgröße für Kommunikationen zwischen dem ersten und dem zweiten Container aufweisen.

8. Verfahren nach Anspruch 1, wobei die Metadaten eines oder mehrere von Folgendem aufweisen: einem Latenztransferkoeffizienten (LTC), der einen Grad angibt, in dem eine Antwortlatenz des ersten Containers die Antwortlatenz des zweiten Containers beeinflusst; und einem oder mehreren Ressourcensättigungskoeffizienten (RSCs), wobei jeder RSC einen Grad angibt, in dem eine betreffende Rechenressource, die von dem ersten Container verwendet wird, die betreffende Rechenressource, die von dem zweiten Container verwendet wird, beeinflusst.

9. Verfahren nach einem der Ansprüche 1-8, wobei der Container eine oder mehrere Anwendungen eines Mikrodienstes auszuführen hat.

10. Einrichtung, die Mittel zum Durchführen des Verfahrens nach einem der Ansprüche 1-9 umfasst.

11. Mindestens ein nichttransitorisches maschinenlesbares Speichermedium mit darauf gespeicherten Anweisungen, wobei die Anweisungen, wenn sie in einer Verarbeitungsschaltungsanordnung einer Rechenvorrichtung ausgeführt werden, die Verarbeitungsschaltungsanordnung dazu veranlassen, das Verfahren nach einem der Ansprüche 1-9 durchzuführen.

## Revendications

1. Procédé à mettre en œuvre sur un nœud contrôleur d'un environnement d'orchestration comprenant une pluralité de nœuds, le procédé comprenant les étapes suivantes :
obtenir des métadonnées associées au déploiement d'un premier conteneur au sein de l'environnement d'orchestration, les métadonnées comportant des informations indiquant des préférences de sécurité pour le déploiement du premier conteneur et un niveau de communication entre le premier conteneur et un deuxième conteneur au sein de l'environnement d'orchestration ;
déterminer, sur la base des métadonnées, des informations de corrélation entre le premier conteneur et le deuxième conteneur pour une utilisation lors de la détermination de co-localisation des premier et deuxième conteneurs ;
recevoir, en provenance d'un agent d'orchestration s'exécutant sur au moins un nœud de la pluralité de nœuds, des informations d'utilisation indicatives de l'utilisation des ressources associée à l'exécution du premier conteneur et du deuxième conteneur ;
mettre à jour périodiquement, pendant l'exécution du premier conteneur et du deuxième conteneur, les informations de corrélation sur la base des informations d'utilisation reçues ;
mettre à jour les informations de corrélation en écrivant des informations de corrélation mises à jour dans une structure de données fantôme séparée d'une structure de données actuellement utilisée et en échangeant les rôles de la structure de données fantôme et de la structure de données actuellement utilisée sans interrompre l'exécution d'un ordonnanceur s'exécutant sur le nœud de contrôleur ;
sélectionner un nœud particulier de la pluralité de nœuds à l'intérieur de l'environnement d'orchestration sur lequel déployer le premier conteneur sur la base des métadonnées, des informations de corrélation mises à jour, d'une détermination de co-localisation des premier et deuxième conteneurs réalisée sur la base des informations de corrélation mises à jour, et des capacités de sécurité du nœud particulier ;
déployer le premier conteneur sur le nœud sélectionné au sein de l'environnement d'orchestration ; et amener le nœud sélectionné à instancier une mémoire partagée destinée à être utilisée pour les communications entre le premier conteneur et le deuxième conteneur.

2. Procédé selon la revendication 1, dans lequel les préférences de sécurité indiquent une pluralité ordonnée d'environnements d'exécution préférés pour le déploiement de conteneur.

3. Procédé selon la revendication 2, dans lequel la pluralité d'environnements d'exécution préférés comprend un environnement d'exécution crypté.

4. Procédé selon la revendication 2 ou la revendication 3, comprenant en outre de sélectionner l'un des environnements d'exécution préférés pour le déploiement de conteneur sur la base d'une capacité du nœud particulier à fournir au moins l'un des environnements d'exécution préférés pour le déploiement de conteneur.

5. Procédé selon la revendication 4, dans lequel le nœud particulier peut supporter plusieurs des environnements d'exécution préférés, et l'environnement d'exécution est sélectionné sur la base de l'ordre des environnements d'exécution préférés.

6. Procédé selon la revendication 4 ou la revendication 5, comprenant en outre l'instanciation d'un conteneur de l'environnement d'exécution sélectionné sur la base d'un conteneur existant d'un autre environnement d'exécution.

7. Procédé selon l'une quelconque des revendications 1 à 6, dans lequel les informations comprennent un ou plusieurs éléments parmi les suivants : une fréquence de communication entre le premier conteneur et le deuxième conteneur, et une taille de charge utile typique pour les communications entre les premier et deuxième conteneurs.

8. Procédé selon la revendication 1, dans lequel les métadonnées comprennent un ou plusieurs des éléments suivants : un coefficient de transfert de latence (LTC) indiquant un degré auquel une latence de réponse du premier conteneur affecte la latence de réponse du deuxième conteneur ; et un ou plusieurs coefficients de saturation de ressource (RSC), chaque RSC indiquant un degré auquel une ressource de calcul particulière utilisée par le premier conteneur affecte la ressource de calcul particulière utilisée par le deuxième conteneur.

9. Procédé selon l'une quelconque des revendications 1 à 8, dans lequel le conteneur doit en outre exécuter une ou plusieurs applications d'un microservice.

10. Appareil comprenant des moyens pour exécuter le procédé selon l'une quelconque des revendications 1 à 9.

11. Au moins un support de stockage non transitoire lisible par ordinateur, comprenant des instructions y étant stockées qui, lorsqu'elles sont exécutées sur des circuits de traitement d'un dispositif informatique, amènent les circuits de traitement à exécuter le procédé de l'une quelconque des revendications 1 à 9.
